(19) Europäisches Patentamt
European Patent Office
Office européen des brevets

(11) EP 4 524 610 A1

(12) EUROPEAN PATENT APPLICATION

(43) Date of publication:
19.03.2025 Bulletin 2025/12

(51) International Patent Classification (IPC):
G01S 7/484 (2006.01)  G01S 7/486 (2020.01)
G01S 7/487 (2006.01)  G01S 17/931 (2020.01)
G01S 13/931 (2020.01)

(21) Application number: 24175567.7

(22) Date of filing: 14.05.2024

(52) Cooperative Patent Classification (CPC):
G01S 17/931; G01S 7/484; G01S 7/486;
G01S 7/487; G01S 2013/9328

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 15.09.2023 JP 2023150432

(71) Applicant: Kabushiki Kaisha Toshiba
Tokyo 105-0023 (JP)

(72) Inventors:
• Hiroshi, Kubota
Tokyo, 105-0023 (JP)
• Katsuyuki, Kimura
Tokyo, 105-0023 (JP)
• Koichiro, Ban
Tokyo, 105-0023 (JP)

(74) Representative: Henkel & Partner mbB
Patentanwaltskanzlei, Rechtsanwaltskanzlei
Maximiliansplatz 21
80333 München (DE)

(54) RANGING APPARATUS

(57) According to one arrangement, a ranging apparatus includes includes a light source (23), a light sensor (26), a measurement circuit (27), and a control circuit (21). The light source is configured to emit a first laser light (LE). The light sensor is configured to detect a second laser light (LR) corresponding to the first laser light reflected by an external subject. The measurement circuit is configured to range a distance to the subject on a basis of a timing at which the light source emits the first laser light and a timing at which the light sensor detects the second laser light. The control circuit is configured to measure a reflection amount of the subject on a basis of a ranging result, and change a ranging parameter according to information using a measured reflection amount.

FIG. 1

EP 4 524 610 A1

**Description**

FIELD

Arrangements described herein relate generally to a ranging apparatus.

BACKGROUND

A ranging apparatus called LiDAR (Light Detection and Ranging) is known. A LiDAR emits laser light to a ranging target. The emitted laser light is reflected by the ranging target, and detected by an optical sensor of the LiDAR. Then, the LiDAR calculates time of flight (ToF) of the laser light on the basis of the time of emission of the laser light and the time of detection of the laser light reflected by the ranging target. As a result, the LiDAR can measure (range) the distance between the LiDAR and the ranging target on the basis of the ToF and the speed of the laser light. As described above, in order for the LiDAR to realize ranging, it is necessary for the light sensor to be able to detect the laser light reflected by the ranging target. For example, since the emitted laser light attenuates more as visibility becomes shorter, detection of the laser light by the light sensor becomes more difficult as visibility becomes shorter. Therefore, the ranging performance of LiDAR tends to deteriorate as visibility decreases.

BRIEF DESCRIPTION OF THE DRAWINGS

FIG. 1 is a schematic diagram illustrating an example of a configuration of a ranging system according to a first arrangement.
FIG. 2 is a block diagram illustrating an example of a configuration of an information processing apparatus included in the ranging system according to the first arrangement.
FIG. 3 is a block diagram illustrating an example of a configuration of a ranging apparatus according to the first arrangement.
FIG. 4 is a schematic diagram illustrating an example of a configuration of an optical system included in the ranging apparatus according to the first arrangement.
FIG. 5 is a schematic diagram illustrating an example of a configuration of a scan area scanned by the ranging apparatus according to the first arrangement.
FIG. 6 is a schematic diagram illustrating an example of a configuration of a light sensor included in the ranging apparatus according to the first arrangement.
FIG. 7 is a schematic diagram illustrating an example of a configuration of an image indicating a ranging result obtained by a ranging operation of the ranging apparatus according to the first arrangement.
FIG. 8 is a schematic diagram illustrating an example of a scanning method based on a first setting of the ranging apparatus according to the first arrangement.
FIG. 9 is a schematic diagram illustrating an example of a configuration based on the first setting of the light sensor and a measurement device included in the ranging apparatus according to the first arrangement.
FIG. 10 is a schematic diagram illustrating an example of a scanning method based on a second setting of the ranging apparatus according to the first arrangement.
FIG. 11 is a schematic diagram illustrating an example of a scanning method based on a third setting of the ranging apparatus according to the first arrangement.
FIG. 12 is a schematic diagram illustrating an example of a configuration based on a fourth setting of the light sensor and the measurement device included in the ranging apparatus according to the first arrangement.
FIG. 13 is a schematic diagram illustrating an example of a scanning method based on a fifth setting of the ranging apparatus according to the first arrangement.
FIG. 14 is a schematic diagram illustrating an example of a light receiving result processing method based on the fifth setting of the ranging apparatus according to the first arrangement.
FIG. 15 is a schematic diagram illustrating an example of a configuration based on a sixth setting of the light sensor and the measurement device included in the ranging apparatus according to the first arrangement.
FIG. 16 is a schematic diagram illustrating an example of a configuration based on a seventh setting of the light sensor and the measurement device included in the ranging apparatus according to the first arrangement.
FIG. 17 is a schematic diagram illustrating an example of a light receiving result processing method based on an eighth setting of the ranging apparatus according to the first arrangement.
FIG. 18 is a flowchart illustrating an example of a setting change operation of the ranging system according to the first arrangement.

FIG. 19 is a graph illustrating an example of a difference in light receiving characteristics between a first comparative example and the first arrangement.

FIG. 20 is a schematic diagram illustrating an example of a configuration of a light sensor and a measurement device included in a ranging apparatus according to a second arrangement.

FIG. 21 is a aschematic diagram illustrating an example of a light receiving result processing method of the ranging apparatus according to the second arrangement.

FIG. 22 is a schematic diagram illustrating an example of a configuration of a light sensor and a measurement device included in a ranging apparatus according to the third arrangement.

FIG. 23 is a schematic diagram illustrating an example of a light receiving result processing method of the ranging apparatus according to the third arrangement.

FIG. 24 is a schematic diagram illustrating an example of a configuration of a light sensor and a measurement device included in a ranging apparatus according to a fourth arrangement.

FIG. 25 is a schematic diagram illustrating an example of a light receiving result processing method of the ranging apparatus according to the fourth arrangement.

FIG. 26 is a schematic diagram illustrating an example of a configuration of a ranging system according to a fifth arrangement.

FIG. 27 is a schematic diagram illustrating an example of a configuration of a landmark used in the ranging system according to the fifth arrangement.

FIG. 28 is a schematic diagram illustrating an outline of a visibility measurement method.

FIG. 29 is a schematic diagram illustrating an example of the visibility measurement method.

FIG. 30 is a flowchart illustrating an example of visibility calculating operation of the ranging system according to the fifth arrangement.

FIG. 31 is a schematic diagram illustrating an example of a light receiving result processing method of a ranging apparatus according to the fifth arrangement.

FIG. 32 is a table illustrating a first example of measurement results to which the visibility calculation method using a subject is applied in the ranging system according to the fifth arrangement.

FIG. 33 is a table illustrating a second example of measurement results to which the visibility calculation method using a subject is applied in the ranging system according to the fifth arrangement.

FIG. 34 is a schematic diagram illustrating an example of a relationship between the position of a landmark LM and the number of pixels.

FIG. 35 is a schematic diagram illustrating an example of a relationship between the light reception amount and the distance in a case where a measurement region RG1 of the landmark is ranged in four conditions with different visibility.

FIG. 36 is a schematic diagram illustrating an example of a relationship between the light reception amount and the distance in a case where a measurement region RG2 of the landmark is ranged in four conditions with different visibility.

FIG. 37 depicts tables illustrating an example of a measurement result in a second comparative example.

FIG. 38 depicts tables illustrating an example of a measurement result in the fifth arrangement.

## DETAILED DESCRIPTION

In general, according to one arrangement, a ranging apparatus includes includes a light source (23), a light sensor (26), a measurement circuit (27), and a control circuit (21). The light source is configured to emit a first laser light (LE). The light sensor is configured to detect a second laser light (LR) corresponding to the first laser light reflected by an external subject. The measurement circuit is configured to range a distance to the subject on a basis of a timing at which the light source emits the first laser light and a timing at which the light sensor detects the second laser light. The control circuit is configured to measure a reflection amount of the subject on a basis of a ranging result, and change a ranging parameter according to information using a measured reflection amount.

Arrangements will now be described hereinafter with reference to drawings. The arrangements illustrate devices and/or methods to realize the technical idea of the invention. The drawings are schematic or conceptual ones. The dimensions and the ratios and the like of the drawings are not necessarily the same as the actual ones. In the following explanations, constituent elements having substantially the same functions and structures are denoted by the same reference numerals.

<1> First Arrangement

The first arrangement relates to a ranging system 1 configured to change a ranging parameter according to visibility. The following is a detailed explanation of the ranging system 1 according to the first arrangement.

<1-1> Configuration

The following is an explanation of a configuration of the ranging system 1 according to the first arrangement.

<1-1-1> Configuration of Ranging System 1

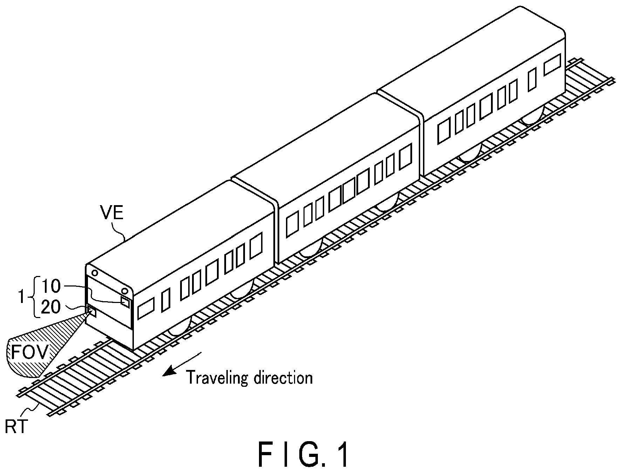

FIG. 1 is a schematic diagram illustrating an example of a configuration of a ranging system according to a first arrangement. FIG. 1 illustrates a state in which a transportation equipment VE including the ranging system 1 is moving through a predetermined route. As illustrated in FIG. 1, the ranging system 1 includes an information processing apparatus 10 and a ranging apparatus 20. The transportation equipment VE is, for example, a railway vehicle. The transportation equipment VE including the ranging system 1 may be an automobile, an aircraft, a ship, or the like. In a case where the transportation equipment VE is a railway vehicle, the predetermined route is a railway track. In a case where the transportation equipment VE is an automobile, the predetermined route is, for example, a road in which a traveling region is defined by a lane marking or the like.

The information processing apparatus 10 is, for example, an apparatus that collects information such as a ranging result acquired from the ranging apparatus 20, a state of the transportation equipment VE, a current location of the transportation equipment VE, and a surrounding environment. The information processing apparatus 10 may be configured to be able to control the ranging apparatus 20 on the basis of the collected information, or may be configured to be able to control acceleration/deceleration, a traveling direction, and the like of the transportation equipment VE. Specifically, the information processing apparatus 10 may have a function of supporting autonomous traveling of the transportation equipment VE.

The ranging apparatus 20 is a type of a LiDAR. The ranging apparatus 20 emits laser light and detects the laser light reflected by a subject (ranging target). Then, the ranging apparatus 20 measures (ranges) the distance between the ranging apparatus 20 and the subject on the basis of the time of flight of the laser light and the speed of the laser light. The ranging parameter of the ranging apparatus 20 can be changed on the basis of visibility information. The visibility information includes visibility information in the surrounding environment of the transportation equipment VE.

The ranging system 1 may acquire visibility information from the outside or may acquire visibility information by measuring visibility in the surrounding environment of the transportation equipment VE by itself. A visibility measurement method using the ranging apparatus 20 will be described in the fifth arrangement. The ranging apparatus 20 is installed, for example, in front of the transportation equipment VE. In this case, the ranging apparatus 20 acquires distance information of a predetermined angle of view in the traveling direction of the transportation equipment VE. In the present specification, the angle of view of the ranging apparatus 20, that is, the extent in which a distance can be ranged by the ranging apparatus 20 is also referred to as "FOV (Field Of View)".

<1-1-2> Configuration of Information Processing Apparatus 10

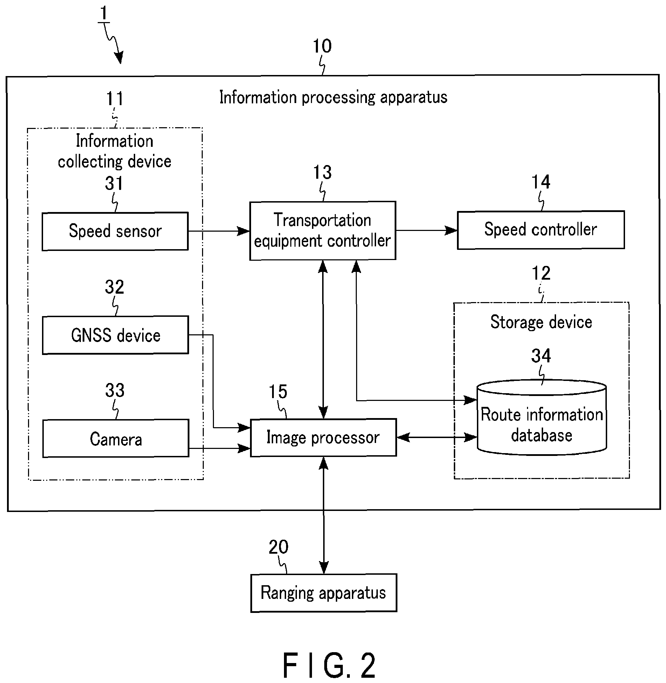

FIG. 2 is a block diagram illustrating an example of a configuration of the information processing apparatus 10 included in the ranging system 1 according to the first arrangement. FIG. 2 also illustrates the ranging apparatus 20. As illustrated in FIG. 2, the information processing apparatus 10 includes, for example, an information collecting device 11, a storage device 12, a transportation equipment controller 13, a speed controller 14, and an image processor 15.

The information collecting device 11 is a device that collects information such as a current location, a state, and a surrounding environment of the transportation equipment VE. The information collecting device 11 includes, for example, a speed sensor 31, a global navigation satellite system (GNSS) device 32, and a camera 33. The speed sensor 31, the GNSS device 32, and the camera 33 are a device group for collecting information such as a current location, a state, and a surrounding environment of the transportation equipment VE. The speed sensor 31 is a sensor that detects the current speed of the transportation equipment VE. The GNSS device 32 is a positioning device receiving radio waves emitted from a plurality of artificial satellites, and specifying the current location of the transportation equipment VE on the basis of the received radio waves. The camera 33 is an optical device capable of imaging an image around the transportation equipment VE.

The storage device 12 is a storage medium used for storing data and/or programs. The storage device 12 stores, for example, a route information database 34. The route information database 34 may include information on a route on which the transportation equipment VE can travel (hereinafter referred to as "route information"), information on the operation of the transportation equipment VE (hereinafter referred to as "operation information"), visibility information, and the like. The route information may include, for example, a distance from a start point on the route, information on landmarks arranged on the traveling route of the transportation equipment VE, and the like. The operation information is set according to, for example, the distance from the start point on the traveling route or the current location of the transportation equipment VE. The information stored in the storage device 12 may be downloaded via a server on the network.

The transportation equipment controller 13 is, for example, a computer configured to be able to communicate with the image processor 15. The transportation equipment controller 13 generates a control signal related to acceleration/deceleration of the transportation equipment VE on the basis of, for example, a speed obtained from the speed sensor 31, an instruction by the image processor 15, information obtained from the image processor 15, operation information acquired from the route information database 34, and the like. The information acquired from the image processor 15 includes, for example, location information of the transportation equipment VE. Then, the transportation equipment controller 13 can control the travel of the transportation equipment VE by transmitting the generated control signal to the speed controller 14.

The speed controller 14 is a device that controls the speed of the transportation equipment VE. The speed controller 14 includes, for example, an acceleration means and a deceleration means for adjusting the speed of the transportation equipment VE. The speed controller 14 controls stop and acceleration/deceleration of the transportation equipment VE on the basis of the control signal received from the transportation equipment controller 13. For example, the speed controller 14 controls a motor or an engine connected to a wheel of the transportation equipment VE or a brake.

The image processor 15 is, for example, a computer configured to be able to communicate with the transportation equipment controller 13. The image processor 15 generates an image, for example, on the basis of ranging information obtained from the ranging apparatus 20. The image includes, for example, information on a distance from the ranging apparatus 20 to a subject present in front of the transportation equipment VE. The image processor 15 may instruct the transportation equipment controller 13 to accelerate or decelerate or stop the transportation equipment VE on the basis of an image obtained from the camera 33, ranging information, or the like. The image processor 15 may be configured to be able to measure visibility on the basis of ranging information. Furthermore, the image processor 15 may instruct the ranging apparatus 20 to change the ranging parameter on the basis of visibility information. The ranging apparatus 20 may change the angle of view, the frame rate, the number of integrations, the amount of laser light, and the like on the basis of an instruction from the image processor 15.

The connection between the devices in the information processing apparatus 10 may be, for example, wired or wireless. The information collecting device 11 and the storage device 12 may be externally connected to the information processing apparatus 10. The information processing apparatus 10 may include a central processing unit (CPU), a read only memory (ROM), a random access memory (RAM), and the like. The CPU of the information processing apparatus 10 may execute each of the processing of the transportation equipment controller 13 and the processing of the image processor 15. The information processing apparatus 10 may be a system constructed with a plurality of devices connected via the network. Specifically, the information processing apparatus 10 is configured to be able to communicate with the ranging apparatus 20 via the communication interface (not illustrated). That is, the information processing apparatus 10 can control the ranging apparatus 20 via the communication interface.

<1-1-3> Configuration of Ranging Apparatus 20

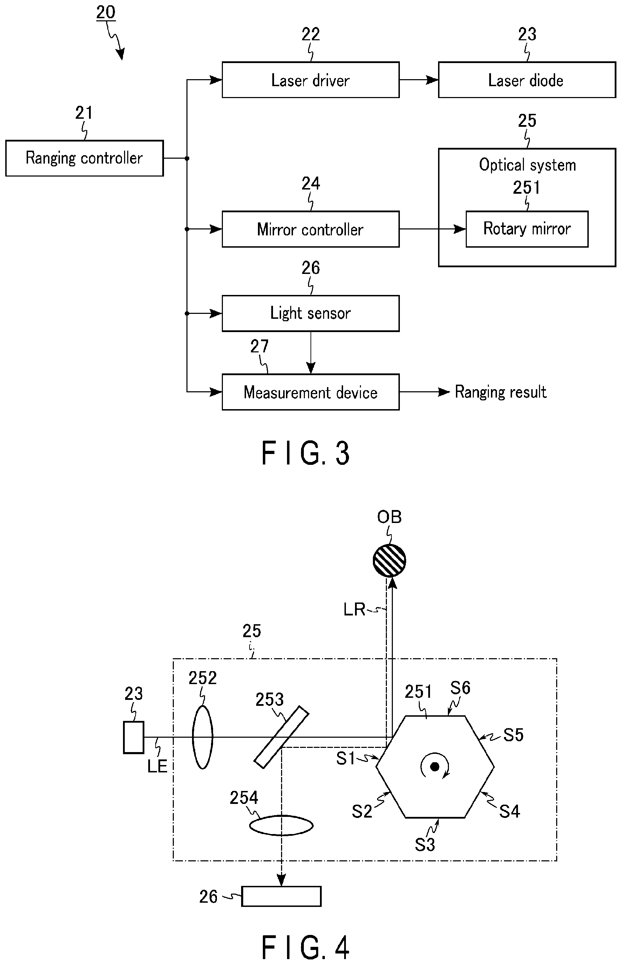

FIG. 3 is a block diagram illustrating an example of a configuration of the ranging apparatus 20 according to the first arrangement. As illustrated in FIG. 3, the ranging apparatus 20 includes, for example, a ranging controller 21, a laser driver 22, a laser diode 23, a mirror controller 24, an optical system 25, a light sensor 26, and a measurement device 27. The optical system 25 includes, for example, a rotary mirror 251.

The ranging controller 21 controls operations of the whole ranging apparatus 20. The ranging controller 21 includes, for example, a CPU, a ROM, a R_AM, and an oscillator (not illustrated). The ROM of the ranging controller 21 stores a control program and the like of the ranging apparatus 20. The CPU of the ranging controller 21 controls the laser driver 22, the mirror controller 24, the light sensor 26, and the measurement device 27 in accordance with the control program. The RAM of the ranging controller 21 is used as a work area of the CPU. The oscillator of the ranging controller 21 is used for generation of intermittent pulse signals. The ranging controller 21 may be configured to be capable of executing various data processing and arithmetic processing.

The laser driver 22 drives the laser diode 23. Specifically, the laser driver 22 functions as a power supply source of the laser diode 23. The laser diode 23 emits laser light on the basis of a drive current supplied from the laser driver 22. The laser light emitted from the laser diode 23 is made incident on the optical system 25. The ranging controller 21 controls the laser driver 22 such that the laser diode 23 intermittently emits laser light. In the following explanation, the laser light generated on the basis of the pulse signal is also referred to as "pulse laser". In the ranging apparatus 20, the pulse laser is emitted with predetermined pulse width and period.

The mirror controller 24 drives the rotary mirror 251 included in the optical system 25. Specifically, the mirror controller 24 functions as a power circuit of a motor to rotate the rotary mirror 251. The rotary mirror 251 is driven (rotated) on the basis of a drive current supplied from the mirror controller 24, and reflects the incident laser light. The rotary mirror 251 is configured to be rotatable around, for example, an axis. The rotary mirror 251 may be a double-sided mirror or a polygon mirror including three or more reflection surfaces (mirror surfaces). The number of rotations can be changed on the basis of the instruction of the ranging controller 21. The rotary mirror 251 may be a biaxial MEMS (Micro Electro Mechanical Systems) mirror. As the rotary mirror 251, a combination of a rotary mirror and a single-axis MEMS mirror may be used. The rotary mirror may be referred to as "movable mirror".

The light sensor 26 is a set of a plurality of light receiving elements (pixels) sensing light made incident on the ranging apparatus 20. The light sensor 26 is disposed such that laser light emitted from the laser diode 23 and reflected by the object outside the ranging apparatus 20 is made incident thereon via the optical system 25. The light sensor 26 converts the laser light made incident on the ranging apparatus 20 into an electrical signal. The conversion into the electric signal is performed using, for example, a circuit such as an analog-to-digital converter (ADC) or a time-to-digital converter (TDC). Thereafter, the light sensor 26 adjusts an output level of the converted electrical signal, and outputs the electrical signal to the measurement device 27. Hereinafter, the electric signal generated on the basis of the light incident by light sensor 26 is also referred to as a light receiving result.

The measurement device 27 measures the time of detection of the laser light by the light sensor 26 on the basis of the light receiving result transmitted from the light sensor 26. For example, the measurement device 27 determines the peak part of the signal corresponding to the light receiving result as the detection time of the laser light. In addition, the measurement device 27 calculates time of flight of the laser light on the basis of the time of emission of the laser light by the laser diode 23 and the time of detection of the laser light reflected by the subject. Thereafter, the measurement device 27 measures (ranges) the distance between the ranging apparatus 20 and the subject on the basis of the time of flight of the laser light and the speed of the laser light. The measurement device 27 outputs a ranging result to the information processing apparatus 10 for each laser light (ranging point) emitted by the ranging apparatus 20.

The measurement device 27 acquires the time of emission of the laser light by the laser diode 23 by, for example, notification from the ranging controller 21. The time of emission of the laser light may be measured by detection of the laser light emitted from the laser diode 23 by the light sensor 26. The measurement device 27 may be configured to output one ranging result on the basis of a signal obtained by adding the light receiving results of the plurality of pixels. The measurement device 27 may be configured to output one ranging result on the basis of a signal obtained by integrating the light receiving results of a plurality of ranging points.

The ranging apparatus 20 according to the first arrangement can change settings of the laser driver 22, the mirror controller 24, and the measurement device 27 in cooperation with one another on the basis of visibility information. For example, the ranging controller 21 can also change the period and timing at which the laser diode 23 emits the pulse laser, the rotational speed of the rotary mirror 251, and/or the integration setting of light receiving results, based on visibility information. The ranging controller 21 may change the setting of the ranging parameter on the basis of an instruction from the information processing apparatus 10 (image processor 15). The frame rate and resolution of the image generated by the image processor 15 can vary depending on the ranging parameter of the ranging apparatus 20. The "resolution" corresponds to the density or the number of pixels included in one frame.

(1: Configuration of Optical System 25)

FIG. 4 is a schematic diagram illustrating an example of a configuration of the optical system 25 included in the ranging apparatus 20 according to the first arrangement. FIG. 4 also illustrates the laser diode 23, the light sensor 26, and an object OB together. In the following explanation, the pulse laser emitted by the laser diode 23 is referred to as "outgoing light LE". The pulse laser (outgoing light LE) reflected by the object OB is also referred to as "reflected light LR".

As illustrated in FIG. 4, the optical system 25 further includes an optical element according to arrangement of the laser diode 23 and/or the light sensor 26. Specifically, the optical system 25 further includes, for example, optical elements 252, 253, and 254. Each of the optical elements 252 and 254 is, for example, a lens or a mirror. The optical element 253 is, for example, a half mirror or a holed mirror. Each of the optical elements 252 and 254 may be formed of a combination of a plurality of lenses and/or a plurality of mirrors.

The optical element 252 guides the outgoing light LE emitted from the laser diode 23 to the optical element 253. The outgoing light LE guided by the optical element 252 is transmitted or passes through the optical element 253, and is applied to the rotary mirror 251. The rotary mirror 251 reflects the applied outgoing light LE in a direction corresponding to the incident angle of the outgoing light LE with respect to the applied surface. The reflected outgoing light LE is reflected by the object OB positioned in the traveling direction of the outgoing light LE outside the ranging apparatus 20.

The reflected light LR from the object OB is reflected by the rotary mirror 251 and applied to the optical element 253. The optical element 253 reflects the reflected light LR reflected by the rotary mirror 251 toward the optical element 254. The optical element 254 guides the reflected light LR reflected by the optical element 253 to the light sensor 26. The light sensor 26 converts the reflected light LR guided by the optical element 254 into an electrical signal, and outputs the electrical signal to the measurement device 27.

The present specification illustrates the case where the rotary mirror 251 is a polygon mirror including six reflection surfaces S1 to S6 having different tilt angles. The ranging controller 21 controls the rotary mirror 251 such that the rotary mirror 251 rotates at a rotational speed based on the frame rate. The ranging apparatus 20 can scan the place to be ranged in a two-dimensional manner with the intermittently emitted outgoing light LE and the rotary mirror 251.

In the following explanation, the region that can be scanned by the ranging apparatus 20 is referred to as "scan area SA". A set of ranging results of a plurality of points corresponding to one scan is referred to as "frame". An image of a frame is generated, for example, in correspondence with one rotation of the rotary mirror 251. The number of pixels of the image indicating the ranging result corresponds to the number of pixels included in one frame. The ranging apparatus 20 can successively acquire distance information of a distance to the object OB positioned in front of the ranging apparatus 20 by successively executing a scan. The optical system 25 may have any other configuration as long as it can execute a scan using laser light.

(2: Configuration of Scan Area SA)

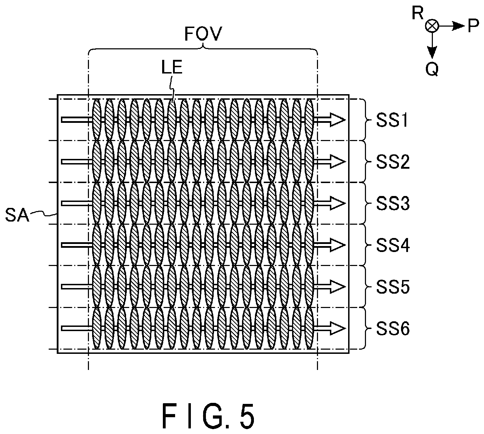

FIG. 5 is a schematic diagram illustrating an example of a configuration of a scan area SA scanned by the ranging apparatus 20 according to the first arrangement. FIG. 5 illustrates an example of an emission direction of the outgoing light LE for one frame in the scan area SA. As illustrated in FIG. 5, the outgoing light LE is applied to a PQR space. A R axis is an axis extending from the ranging apparatus 20 to the subject, and extends along, for example, the center of the emission direction of the outgoing light LE. A PQ plane is a curved surface orthogonal to the R axis and extending from the emission surface of the outgoing light LE in a concentric circle manner. A P axis and a Q axis are axes orthogonal to each other in the PQ plane. The distance data measured on the basis of each outgoing light LE is generated as, for example, a map on the PQ plane. The ranging system 1 can map the distance data to the object existing in the space PQR in association with the FOV in the scan area SA, and recognize the distance to the object existing in the FOV.

The ranging controller 21 achieves a scan in the P direction (lateral direction) by controlling the laser driver 22 and the mirror controller 24 and the like to intermittently emit the outgoing light LE at timings based on the ranging parameter. In a case of using the rotary mirror 241 including six reflection surfaces S1 to S6, the scan area SA includes first line SS1 to sixth line SS6. The scan positions of the first line SS1 to the sixth line SS6 are based on the tilt angles of the reflection surfaces S1 to S6, respectively. Specifically, the ranging apparatus 20 achieves a plurality of lines of scan shifted in the Q direction (vertical direction) by application of the outgoing light LE to different reflection surfaces by rotation of the rotary mirror 251. Furthermore, the ranging apparatus 20 can change the scanning speed and the emission timing of the outgoing light LE according to the ranging parameter.

The ranging apparatus 20 can generate a plurality of pixels (distance data) arranged in a one-dimensional manner for one outgoing light LE. The ranging apparatus 20 repeatedly executes processing of the measurement period relating to measurement associated with one outgoing light LE while shifting in a one-dimensional manner along the P axis in each of the first line SS1 to the sixth line SS6. In this manner, the ranging apparatus 20 can generate distance data in the set FOV. Such a scanning method is also referred to as "multi-channel raster scan". The outgoing light LE having an application surface having a vertically elongated shape is used as means for achieving multi-channel raster scan. The number of lines and/or the scan direction in one scan of the ranging apparatus 20 may have other settings.

(3: Configuration of Light Sensor 26)

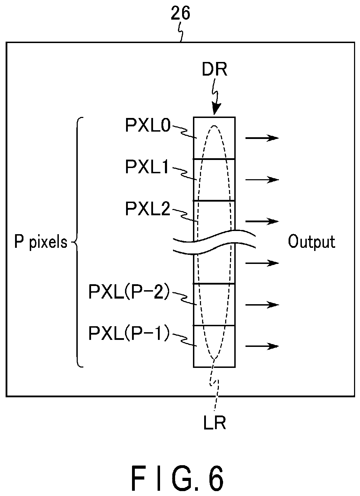

FIG. 6 is a schematic diagram illustrating an example of a configuration of the light sensor 26 included in the ranging apparatus 20 according to the first arrangement. In FIG. 6, the reflected light LR that can be applied to the light sensor 26 is indicated by a broken line. As illustrated in FIG. 6, the light sensor 26 includes a light receiving region DR including P (P is an integer of 2 or more) light receiving elements PXLO to PXL (P -1) arranged in a one-dimensional manner. The shape of the light receiving region DR is designed on the basis of the shape of the outgoing light LE emitted from the ranging apparatus 20. Each light receiving element PXL may be referred to as a pixel.

The reflected light LR incident on the light sensor 26 is applied to each light receiving element PXL in the light receiving region DR. Each light receiving element PXL is configured to convert the light amount of the reflected light LR incident on the light receiving region DR into a current or a voltage and output the current or the voltage. One light receiving element PXL includes, for example, at least one photomultiplier element as an element that converts light into an electrical signal. For example, a single-photon avalanche diode (SPAD) serving as a type of avalanche photodiodes is used as the photomultiplier element.

FIG. 6 illustrates a case where the light sensor 26 is a one-dimensional sensor, but the present disclosure is not limited thereto. The light sensor 26 may be a two-dimensional sensor having a configuration in which a plurality of light receiving regions DR illustrated in FIG. 6 are arranged in each of the longitudinal direction and the lateral direction. The light sensor 26 may be configured to enable and disable the conversion of the applied light into the electric signal for each light receiving element PXL, for example, according to the control of the ranging controller 21.

<1-1-4> Configuration of Ranging Result

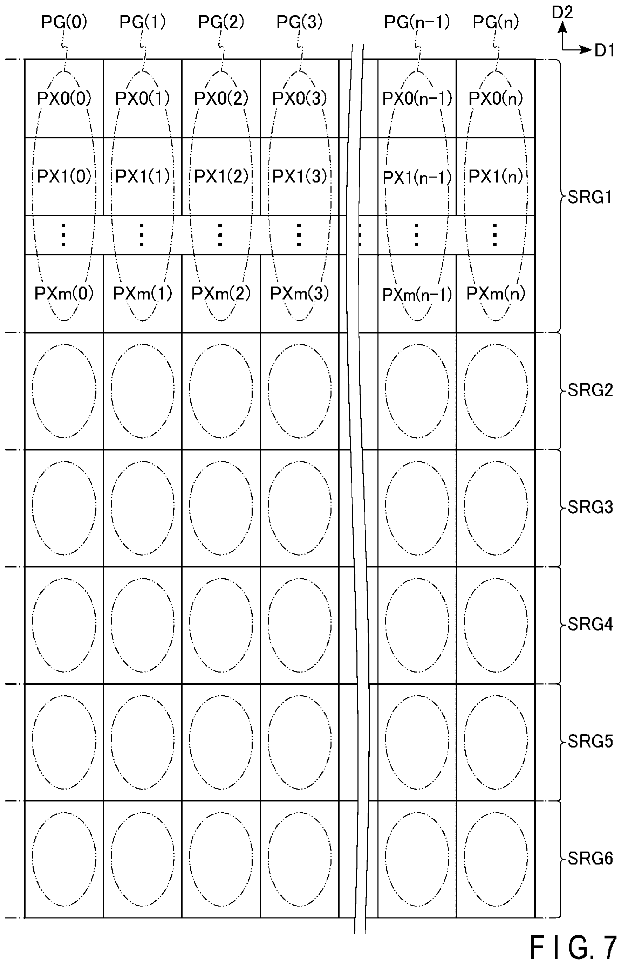

FIG. 7 is a schematic diagram illustrating an example of a configuration of an image indicating a ranging result obtained by a ranging operation of the ranging apparatus 20 according to the first arrangement. The image processor 15 can generate an image in units of frames on the basis of the distance data received from the measurement device 27. As illustrated in FIG. 7, the two-dimensional image indicating the ranging result obtained by the ranging operation of the ranging system 1 includes six scan result groups SRG1 to SRG6.

The scan result groups SRG1 to SRG6 correspond to the ranging results of the first line SS1 to the sixth line SS6 of the scan area SA, respectively. Each scan result group SRG includes a plurality of pixel groups PG (0) to PG (n) (n is an integer of 1 or more) arranged in a first direction D1. Each pixel group PG includes a plurality of pixels PX0 to PXm (m is an integer of 1 or more) arranged in a second direction intersecting the first direction D1. Specifically, the pixel group PG (0) includes a plurality of pixels PX0 (0) to PXm (0) arranged in the second direction D2. The pixel group PG (n) includes a plurality of pixels PX0 (0) to PXm (n) arranged in the second direction D2.

The plurality of pixels PX0 to PXm included in one pixel group PG is based on a ranging result of at least one ranging point. Each pixel group PG may be generated on the basis of ranging results of a plurality of ranging points. In the present example, each scan result group SRG includes (m + 1) × (n + 1) pixels PX. The number of scan result groups SRG included in the two-dimensional image can be appropriately changed according to the design of the optical system 25. Furthermore, the number of pixels PX included in each pixel group PG can be appropriately changed according to the design of the light sensor 26 and the measurement device 27, a ranging parameter, and the like.

<1-2> Operation

Next, an operation of the ranging system according to the first arrangement will be explained.

<1-2-1> Ranging operation

In the ranging system 1 according to the first arrangement, the ranging apparatus 20 is configured to be able to use at least one of the first setting to the eighth setting as the ranging parameter. Hereinafter, a case where the first setting to the eighth setting are applied as the ranging operation of the ranging apparatus 20 will be sequentially described.

(1: First Setting)

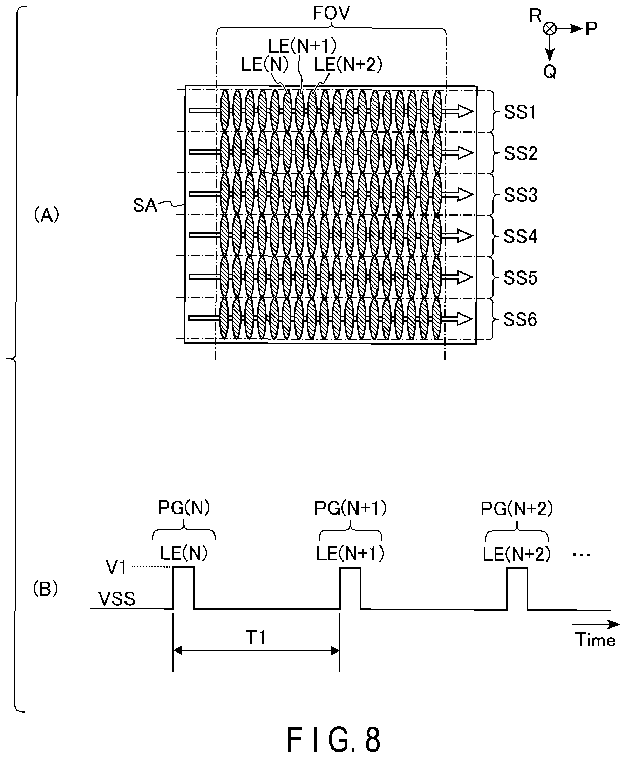

FIG. 8 is a schematic diagram illustrating an example of a scanning method based on a first setting of the ranging apparatus 20 according to the first arrangement. (A) of FIG. 8 illustrates an emission position of the outgoing light LE in the scan area SA in a case where the first setting is applied. (B) FIG. 8 illustrates a waveform of a control signal for controlling emission timings and light intensities of outgoing lights LE (N), LE (N + 1), and LE (N + 2) (N is an integer of 0 or more) illustrated in (A) of FIG. 8.

The emission position of the outgoing light LE illustrated in (A) of FIG. 8 is similar to that of the scan area SA illustrated in FIG. 5. As illustrated in (B) of FIG. 8, the ranging controller 21 generates a pulse signal of a voltage V1 in a period T1 and supplies the pulse signal to the laser driver 22. Then, the laser driver 22 generates a drive current of the laser diode 23 on the basis of the supplied pulse signal. Then, the laser diode 23 emits laser light (outgoing light LE) having light intensity based on the voltage V1. As described above, in the first setting, the laser diode 23 generates the outgoing light LE in the period T1. The measurement device 27 generates the pixel group PG (N) on the basis of the outgoing light LE (N), generates the pixel group PG (N + 1) on the basis of the outgoing light LE (N + 1), and generates the pixel group PG (N + 2) on the basis of the outgoing light LE (N + 2).

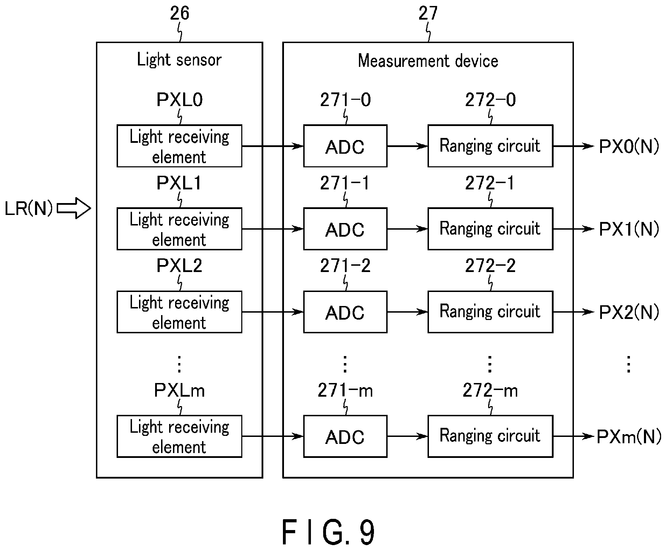

FIG. 9 is a schematic diagram illustrating an example of a configuration based on the first setting of the light sensor 26 and the measurement device 27 included in the ranging apparatus 20 according to the first arrangement. As illustrated in FIG. 9, the measurement device 27 in the first setting includes analog-to-digital converters (ADCs) 271-0 to 271-m and ranging circuits 272-0 to 272-m.

Each of the light receiving elements PXLO to PXLm included in the light sensor 26 converts the applied reflected light LR (N) into an electrical signal and outputs the electrical signal. The ADCs 271- 0 to 271- m convert output signals of the light receiving elements PXLO to PXLm into digital signals, respectively. The digital signals converted by the ADCs 271- 0 to 271- m are input to the ranging circuits 272-0 to 272-m, respectively. The ranging circuits 272-0 to 272-m generate distance data on the basis of peak positions of the digital signals input from the ADCs 272-0 to 272-m, respectively, and transmit the generated distance data to the image processor 15. The distance data generated by the ranging circuits 272-0 to 272-m correspond to the pixels PX0 (N) to PXm (N), respectively.

As described above, in the first setting, each pixel PX is generated corresponding to each ranging point on the basis of the light detection result by one light receiving element PXL. The first setting is used, for example, in a case where visibility in the surrounding environment of the transportation equipment VE is sufficiently high.

(2: Second Setting)

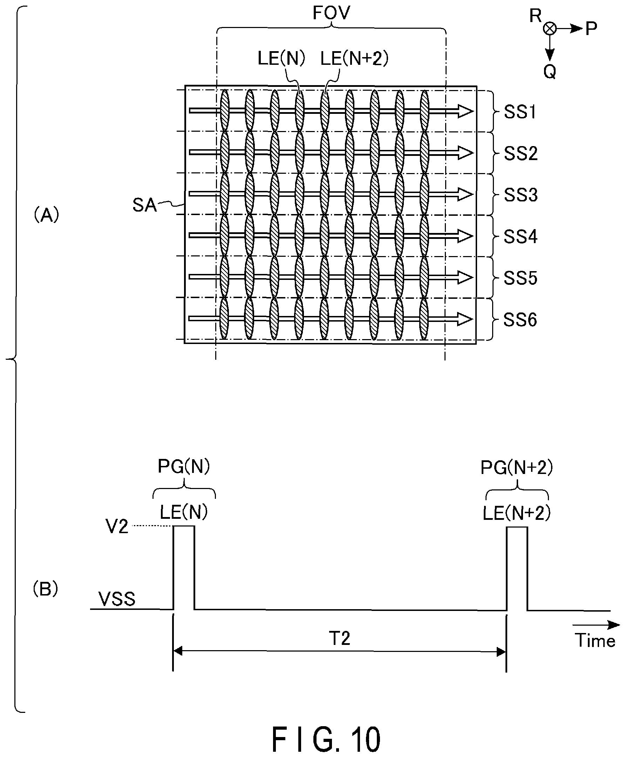

FIG. 10 is a schematic diagram illustrating an example of a scanning method based on a second setting of the ranging apparatus 20 according to the first arrangement. (A) of FIG. 10 illustrates emission timings of the outgoing light LE in the scan area SA in a case where the second setting is applied. (B) of FIG. 10 illustrates a waveform of a control signal for controlling emission timings and light intensities of outgoing lights LE (N) and LE (N + 2) illustrated in FIG. 10A.
The emission position of the outgoing light LE illustrated in (A) of FIG. 10 is similar to that in which the outgoing light LE (N + 1), for example, is omitted in one of the two consecutive times of the outgoing light LE with respect to the scan area SA illustrated in FIG. 5. In other words, the emission position of the outgoing light LE in the second setting is similar to that in which the emission of the outgoing light LE is omitted every other time in the first setting.
As illustrated in (B) of FIG. 10, the ranging controller 21 generates a pulse signal of a voltage V2 in a period T2 and supplies the pulse signal to the laser driver 22. The period T2 is, for example, twice the period T1. The voltage V2 is higher than the voltage V1. Then, the laser diode 23 emits laser light (outgoing light LE) having light intensity based on the voltage V2. The light intensity of the laser light based on the voltage V2 is stronger than the light intensity of the laser light based on the voltage V1.
In the second setting, since the outgoing light LE is generated in the period T2 longer than the period T1, the number of measurement points in each line SS is smaller than that in the first setting. That is, in the second setting, the number of pixels PX arranged in the first direction D1 is smaller than that in the first setting. Instead, in the second setting, the laser energy of each outgoing light LE can be increased more than in the first setting, and the laser light can be emitted farther than in the first setting. The second setting is used, for example, in a case where visibility in the surrounding environment of the transportation equipment VE is lower than a predetermined length.
In the above description, the case where the emission of the outgoing light LE is omitted so that the number of pixels is half the first setting has been exemplified, but the present invention is not limited thereto. In the second setting, the number of times of emission of the outgoing light LE may be set to be smaller than that in the first setting, and the light intensity of the laser light may be set to be higher than that in the first setting. That is, the ranging controller 21 to which the second setting is applied only needs to reduce the number of times of the outgoing light LE emitted per frame in the ranging operation and increase the energy of the outgoing light LE in accordance with visibility information.

(3: Third Setting)

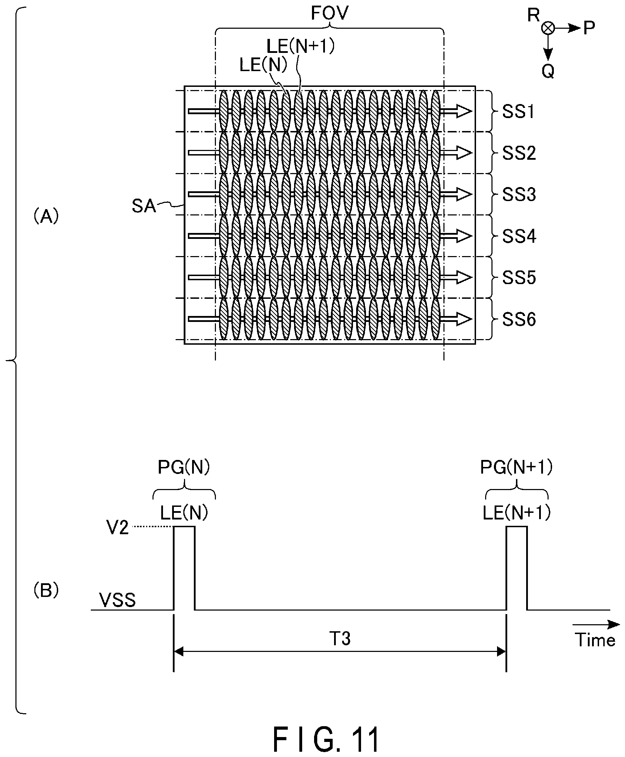

FIG. 11 is a schematic diagram illustrating an example of a scanning method based on a third setting of the ranging apparatus 20 according to the first arrangement. (A) of FIG. 11 illustrates an emission timing of the outgoing light LE in the scan area SA in a case where the third setting is applied. (B) of FIG. 11 illustrates a waveform of a control signal for controlling emission timings and light intensities of outgoing lights LE (N) and LE (N + 1) illustrated in (A) of FIG. 11.
The emission position of the outgoing light LE illustrated in (A) of FIG. 11 is similar to that of the scan area SA illustrated in FIG. 5. As illustrated in (B) of FIG. 11, the ranging controller 21 generates a pulse signal of a voltage V2 in a period T3 and supplies the pulse signal to the laser driver 22. The period T3 is, for example, twice the period T1. The frame rate of the image generated in the third setting is lower than that in the first setting since the outgoing light LE is emitted at a period longer than that in the first setting and the emission position of the outgoing light LE is similar to that in the first setting. In other words, in the third setting, while the number of pixels PX is similar to that in the first setting, the frame rate is lower than that in the first setting. Instead, in the third setting, the laser energy of each outgoing light LE can be increased more than in the first setting, and the laser light can be emitted farther than in the first setting. As described above, in the third setting, the frame rate is reduced with respect to the first setting, but the laser energy per pixel PX is increased. That is, the ranging controller 21 to which the third setting is applied only needs to reduce the frame rate in the ranging operation and increase the energy of the outgoing light LE in accordance with visibility information. The third setting is used, for example, in a case where visibility in the surrounding environment of the transportation equipment VE is lower than a predetermined length.

(4: Fourth Setting)

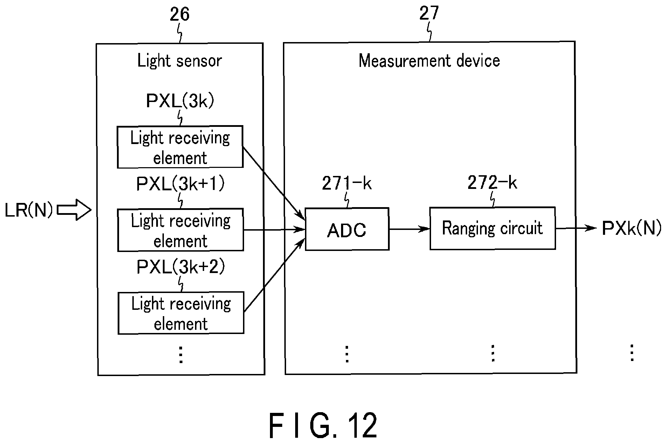

FIG. 12 is a schematic diagram illustrating an example of a configuration based on a fourth setting of the light sensor 26 and the measurement device 27 included in the ranging apparatus 20 according to the first arrangement. As illustrated in FIG. 12, the measurement device 27 in the fourth setting includes an ADC 271-k and a ranging circuit 272-k (k is an integer of 0 or more).
Each of the light receiving elements PXL (3k), PXL (3k + 1), and PXL (3k + 2) included in the light sensor 26 converts the applied reflected light LR (N) into an electrical signal and outputs the electrical signal. Then, the output signals of the light receiving elements PXL (3k), PXL (3k + 1), and PXL (3k + 2) are added and input to the ADC 271-k. The ADC 271-k converts the added output signal into a digital signal and inputs the digital signal to the ranging circuit 272-k. The ranging circuit 272-k generate distance data on the basis of peak positions of digital signals input from the ADC 272-k, and transmit the generated distance data to the image processor 15. The distance data generated by the ranging circuit 272-k correspond to the pixel PXk (N).

As described above, in the fourth setting, each pixel PX is generated corresponding to each ranging point on the basis of the light detection result by three light receiving elements PXL. In the fourth setting, the number of pixels PX generated on the basis of one outgoing light LE (N) is smaller than that in the first setting. That is, in the fourth setting, the number of pixels PX arranged in the second direction D2 in the pixel group PG is smaller than that in the first setting. The connection between the plurality of light receiving elements PXL and one ADC 271 can be realized by, for example, a switch circuit provided in the light sensor 26 or the measurement device 27.

In the present example, the case where the output signals of the three light receiving elements PXL are added and input to one ADC 272 has been described, but the present invention is not limited thereto. In the fourth setting, the output signals of at least two light receiving elements PXL may be added and input to one ADC 272. Therefore, in the fourth setting, the number of pixels PX to be output may change according to the number of light receiving elements PXL associated with one ADC 272. For example, in a case where the output signals of the three light receiving elements PXL are added and input to one ADC 272, (m/3) pixels PX arranged in the second direction D2 are generated on the basis of one outgoing light LE (N).

(5: Fifth Setting)

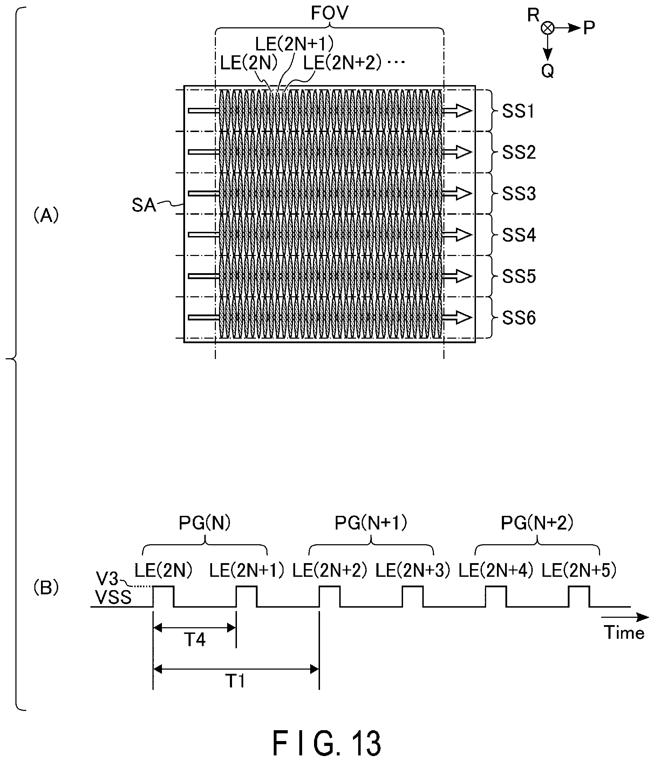

FIG. 13 is a schematic diagram illustrating an example of a scanning method based on a fifth setting of the ranging apparatus 20 according to the first arrangement. (A) of FIG. 13 illustrates an emission timing of the outgoing light LE in the scan area SA in a case where the fifth setting is applied. (B) of FIG. 13 illustrates a waveform of a control signal for controlling emission timings and light intensities of outgoing lights LE (2N), LE (2N + 1), LE (2N + 2), LE (2N + 3), LE (2N + 4), and LE (2N + 5) illustrated in (A) of FIG. 13.

The emission position of the outgoing light LE illustrated in (A) of FIG. 13 is similar to that in which the arrangement density of the outgoing light arranged in the P direction in the scan area SA illustrated in FIG. 5 is doubled. As illustrated in (B) of FIG. 13, the ranging controller 21 generates a pulse signal of a voltage V3 in a period T4 and supplies the pulse signal to the laser driver 22. The period T4 is, for example, a half of the period T1. In this case, pulse signals corresponding to the outgoing light LE (2N), the outgoing light LE (2N + 2), the outgoing light LE (2N + 4),... are generated in the period T1. The voltage V3 is, for example, a half of the voltage V1. In the fifth setting, the laser diode 23 emits laser light (outgoing light LE) having light intensity based on the voltage V3. The light intensity of the laser light based on the voltage V3 is weaker than the light intensity of the laser light based on the voltage V1. Then, in the fifth setting, the light receiving result corresponding to the outgoing light LE (2N) and the light receiving result corresponding to the outgoing light LE (2N + 1) are integrated to generate the ranging data of one pixel group PG (N).

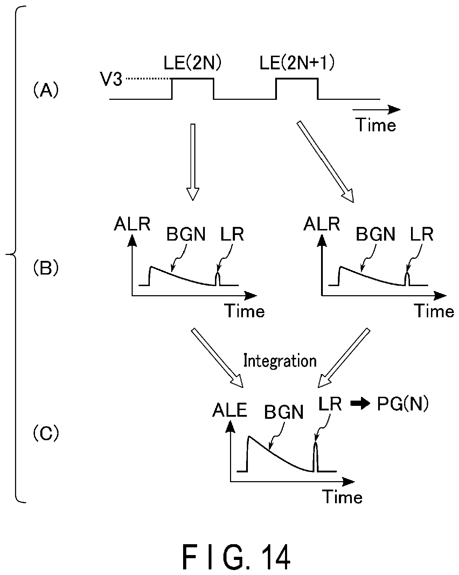

FIG. 14 is a schematic diagram illustrating an example of a light receiving result processing method based on the fifth setting of the ranging apparatus 20 according to the first arrangement. (A) of FIG. 14 corresponds to the emission timings and the light intensities of outgoing lights LE (2N) and LE (2N + 1) illustrated in (B) of FIG. 13. (B) of FIG. 14 illustrates temporal changes (light receiving results) of two types of the light reception amounts ALR respectively corresponding to the outgoing light LE (2N) and LE (2N + 1) illustrated in (A) of FIG. 14. (C) of FIG. 14 illustrates a waveform in which the temporal changes (light receiving results) of two types of the light reception amounts ALR corresponding to the outgoing lights LE (2N) and LE (2N + 1) illustrated in (B) of FIG. 14 are integrated.

As illustrated in FIG. 14, in the fifth setting, the light receiving results of the two outgoing lights LE (2N) and LE (2N + 1) are integrated, and the peak position corresponding to the reflected light LR is detected on the basis of the integrated light receiving result. Then, the distance data of the pixel group PG (N) is generated on the basis of the peak position. The frame rate and resolution of the image generated in the fifth setting are, for example, similar to those in the first setting. In the fifth setting, the laser energy of each outgoing light LE is reduced as compared with the first setting, and the light receiving results of the plurality of measurement points are integrated and used. That is, in the fifth setting, the laser energy per measurement is reduced, but the number of measurements per pixel PX is increased. In other words, the ranging controller 21 to which the fifth setting is applied only needs to increase the number of times of the outgoing light LE emitted per unit time in the ranging operation and reduce the energy of the outgoing light LE in accordance with visibility information.

For example, in a case where the light receiving component due to scattering by fog (water) near the LiDAR is too large, there is a possibility that the light reception amount by the background noise BGN exceeds the dynamic range. In such a case, the fifth setting is applied, and light can be converted into an electrical signal within the dynamic range by reducing the laser power. That is, the fifth setting can suppress saturation of the background noise BGN of the light receiving result at each ranging point, and can reduce the influence of scattering by fog near the LiDAR. On the other hand, even if the laser energy per one time is 1/2 times, the light reception amount based on the reflected light LR from the subject can be made equivalent to the first setting by integrating the laser energy twice. The fifth setting is used, for example, in a case where visibility in the surrounding environment of the transportation equipment VE is less than a predetermined length and there is a possibility that the background noise BGN is saturated.

(6: Sixth Setting)

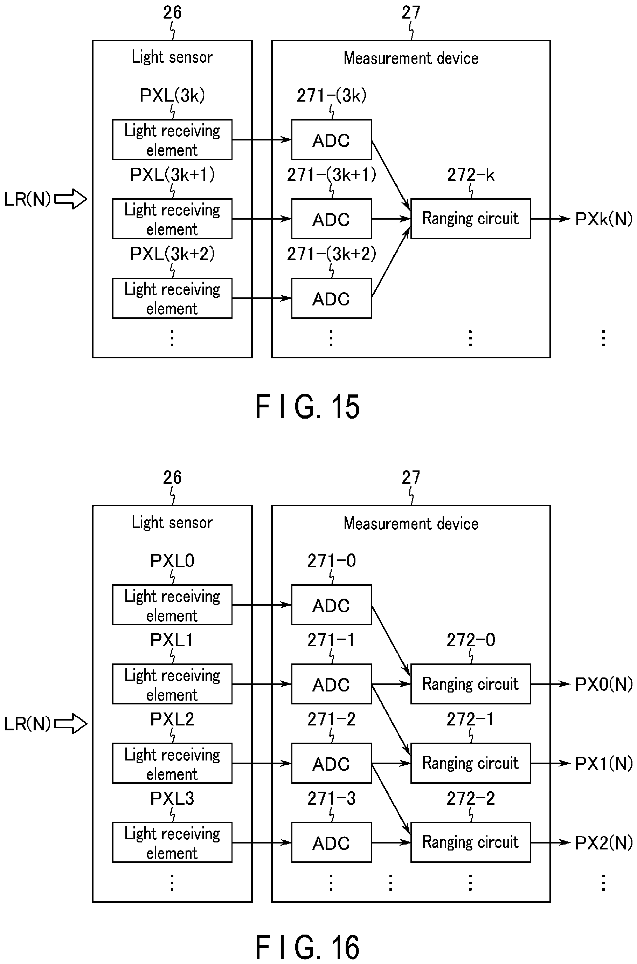

FIG. 15 is a schematic diagram illustrating an example of a configuration based on a sixth setting of the light sensor 26 and the measurement device 27 included in the ranging apparatus 20 according to the first arrangement. As illustrated in FIG. 15, the measurement device 27 in the sixth setting includes an ADCs 271-(3 k), 271-(3 k + 1), and 271-(3 k + 2), and the ranging circuit 272-k.

Each of the light receiving elements PXL (3k), PXL (3k + 1), and PXL (3k + 2) included in the light sensor 26 converts the applied reflected light LR (N) into an electrical signal and outputs the electrical signal. Then, output signals of the light receiving elements PXL (3 k), PXL (3 k + 1), and PXL (3 k + 2) are input to the ADCs 271-(3 k), 271-(3 k + 1), and 271-(3 k + 2), respectively. Each of the ADCs 271-(3 k), 271-(3 k + 1), and 271-(3 k + 2) converts the input signal into a digital signal and inputs the digital signal to the ranging circuit 272-k. Output signals of the ADCs 271-(3 k), 271-(3 k + 1), and 271-(3 k + 2) are added and input to the ranging circuit 272-k. The ranging circuit 272-k generates distance data on the basis of a peak position of the added digital signals, and transmit the generated distance data to the image processor 15. The distance data generated by the ranging circuit 272-k corresponds to the pixel PXk (N).

As described above, in the sixth setting, each pixel PX is generated corresponding to each ranging point on the basis of the light detection result by three light receiving elements PXL. In the sixth setting, the number of pixels PX generated based on one outgoing light LE (N) is smaller than that in the first setting. That is, in the sixth setting, the number of pixels PX arranged in the second direction D2 in the pixel group PG is smaller than that in the first setting. Input of a digital signal from the plurality of ADCs 271 to one ranging circuit 272 can be realized by a logic circuit or the like provided in the measurement device 27. That is, in the sixth setting, in the system in which the ADC sampling is executed in the measurement device 27, the light receiving results are added by the logic circuit and input to the ranging circuit 272.

In the present example, the case where the output signals of the three ADCs 271 are added and input to one ranging circuit 272 has been described, but the present invention is not limited thereto. In the sixth setting, the output signals of at least two ADCs 271 may be added and input to one ranging circuit 272. Therefore, in the sixth setting, the number of pixels PX to be output may change according to the number of sets of the light receiving elements PXL and the ADCs 271 associated with one ranging circuit 272. For example, in a case where the output signals of the three ADCs 271 are added and input to one ranging circuit 272, (m/3) pixels PX arranged in the second direction D2 are generated on the basis of one outgoing light LE (N). The sixth setting is used, for example, in a case where visibility in the surrounding environment of the transportation equipment VE is lower than a predetermined length.

(7: Seventh Setting)

FIG. 16 is a schematic diagram illustrating an example of a configuration based on a seventh setting of the light sensor 26 and the measurement device 27 included in the ranging apparatus 20 according to the first arrangement. As illustrated in FIG. 16, in the seventh setting, each of the light receiving elements PXLO to PXLm included in the light sensor 26 converts the applied reflected light LR (N) into an electrical signal and outputs the electrical signal. Then, output signals of the light receiving elements PXLO to PXLm are input to the ADCs 271-0 to 271-m, respectively.

Each of the ADCs 271-0 and 271-1 converts the input signal into a digital signal and inputs the digital signal to the ranging circuit 272-0. Each of the ADCs 271-1 and 271-2 converts the input signal into a digital signal and inputs the digital signal to the ranging circuit 272-1. Similarly, each of the ADCs 271-(k) and 271-(k + 1) converts the input signal into a digital signal and inputs the digital signal to the ranging circuit 272-k. The output signals of the ADCs 271-k and 271-(k + 1) are added and input to the ranging circuit 272-k. The ranging circuit 272-k generates distance data on the basis of peak positions of the added digital signals, and transmit the generated distance data to the image processor 15. The distance data generated by the ranging circuit 272-k corresponds to the pixel PXk (N).

As described above, in the seventh setting, each pixel PX is generated corresponding to each ranging point on the basis of the light detection results by the two adjacent light receiving elements PXL. In the seventh setting, at least one light receiving element PXL used to generate two adjacent pixels PX overlaps. In the seventh setting, unlike the sixth setting, the number of pixels PX generated on the basis of one outgoing light LE (N) is the same as that in the first setting. That is, in the seventh setting, the number of pixels PX arranged in the second direction D2 in the pixel group PG is the same as that in the first setting. Input of a digital signal from the plurality of ADCs 271 to one ranging circuit 272 can be realized by a logic circuit or the like provided in the measurement device 27. That is, in the seventh setting, in the system in which the ADC sampling is executed in the measurement device 27, the light receiving results are added by the logic circuit and input to the ranging circuit 272.

In the present example, the case where the output signals of the two ADCs 271 are added and input to one ranging circuit 272 has been described, but the present invention is not limited thereto. In the seventh setting, the output signals of at least two ADCs 271 may be added and input to one ranging circuit 272. The number of ADCs 271 used in the seventh setting is substantially equal to the number of ranging results (that is, the pixel PX) output from the measurement device 27 on the basis of one outgoing light LE. Two adjacent pixels PX may share the light receiving result of at least one light receiving element PXL. The seventh setting is used, for example, in a case where visibility in the surrounding environment of the transportation equipment VE is lower than a predetermined length.

(8: Eighth Setting)

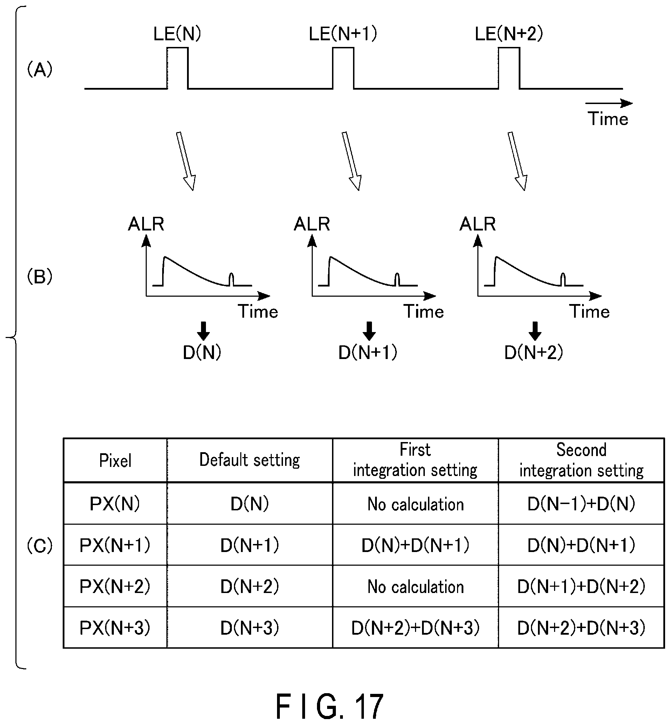

FIG. 17 is a schematic diagram illustrating an example of a light receiving result processing method based on an eighth setting of the ranging apparatus 20 according to the first arrangement. (A) of FIG. 17 illustrates a waveform of a control signal for controlling emission timings of outgoing lights LE (N), LE(N + 1), and LE (N + 2) illustrated in (A) of FIG. 8. (B) of FIG. 17 illustrates temporal changes (light receiving results) of three types of the light reception amounts ALR respectively corresponding to the outgoing light LE (N), LE (N + 1), and LE (N + 2) illustrated in (A) of FIG. 17. (C) of FIG. 17 is a table illustrating a more detailed setting of the eighth setting.

As illustrated in (A) of FIG. 17, the waveform of the control signal for controlling the emission timings of the outgoing lights LE (N), LE (N + 1), and LE (N + 2) in the eighth setting are similar to those in the first setting. The light receiving result corresponding to each outgoing light LE illustrated in (B) of FIG. 17 is stored, for example, in a predetermined storage area of the measurement device 27 for integration processing to be described later. As illustrated in (C) of FIG. 17, in the eighth setting, the integration processing is executed, and in the integration processing, for example, a first integration setting and a second integration setting can be used. The default setting corresponds to a case where integration of light receiving results is not used. For example, in the case of the default setting, the pixels PX (N), PX (N + 1), PX (N + 2), and PX (N + 3) are calculated on the basis of the light receiving results D (N), D (N + 1), D (N + 2), and D (N + 3), respectively.

In the first integration setting, the pixels PX (N) and PX (N + 2) are not calculated (no ranging data), the distance data of the pixel PX (N + 1) is calculated on the basis of the result of integrating the light receiving results D (N) and D (N + 1), and the distance data of the pixel PX (N + 3) is calculated on the basis of the result of integrating the light receiving results D (N + 2) and D (N + 3). Therefore, in the first integration setting, the number of pixels PX arranged in the first direction D1 decreases.

In the second integration setting, the pixel PX (N) is calculated on the basis of the result of integrating the light receiving results D (N - 1) and D (N), the pixel PX (N + 1) is calculated on the basis of the result of integrating the light receiving results D (N) and D (N + 1), the pixel PX (N + 2) is calculated on the basis of the result of integrating the light receiving results D (N + 1) and D (N + 2), and the pixel PX (N + 3) is calculated on the basis of the result of integrating the light receiving results D (N + 2) and D (N + 3). That is, in the second integration setting, the number of pixels arranged in the first direction D1 is similar to that in the default setting.

In the present example, the case where the distance data constituting one pixel group PG is calculated by adding the light receiving results corresponding to the two ranging points (outgoing light LE) has been exemplified, but the present invention is not limited thereto. In the eighth setting, the distance data corresponding to one pixel PX may be generated by adding the light receiving results corresponding to at least two or more ranging points. In other words, the ranging controller 21 to which the eighth setting is applied only needs to change the integrated number of light receiving results of the reflected light LR used for ranging by the measurement device 27 in the ranging operation according to the visibility information. The eighth setting is used, for example, in a case where visibility in the surrounding environment of the transportation equipment VE is lower than a predetermined length.

<1-2-2> Setting Change Operation

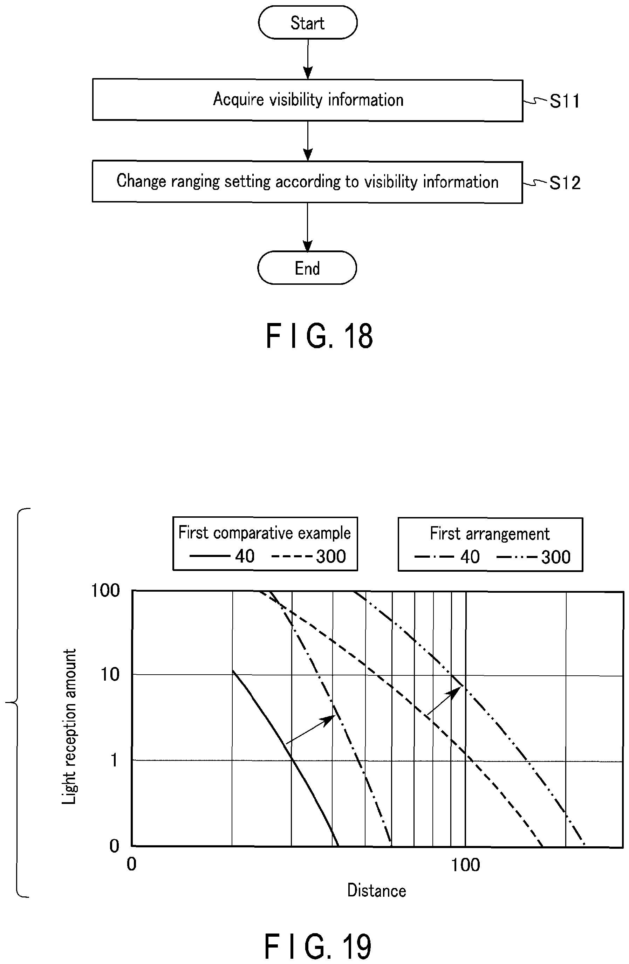

FIG. 18 is a flowchart illustrating an example of a setting change operation of the ranging system 1 according to the first arrangement. The following is an explanation of a setting change operation of the ranging system 1 according to the first arrangement with reference to FIG. 18.

The ranging system 1 starts (Start) a setting change operation on the basis of a user operation, a predetermined schedule, or the like. First, the ranging system 1 acquires visibility information (S11). As the visibility information, visibility information calculated on the basis of measurement by the ranging apparatus 20 may be used, or visibility information received from the outside may be used. Next, the ranging system 1 changes ranging settings in accordance with visibility information (S12). This ranging setting corresponds to, for example, any of the first to eighth settings described above. For example, the ranging system 1 uses the first setting in a case where visibility is sufficiently long. On the other hand, the ranging system 1 uses any one of the second to eighth settings in a case where visibility is shorter than a predetermined value. The ideas of the second to eighth settings described above may be combined within a possible extent. When the ranging setting based on the visibility information is reflected in the ranging parameter, the ranging system 1 ends a series of processes in FIG. 18 (End) .

<1-3> Advantageous Effect of First Arrangement

According to the ranging system 1 according to the first arrangement described above, it is possible to suppress deterioration in ranging performance depending on visibility. The following is an explanation of details of the advantageous effect of the first arrangement.

For example, in a case where fog occurs, visibility is significantly reduced, and laser light is greatly attenuated. The ranging over a long distance by LiDAR may not be possible because visibility is shortened in a case where fog occurs, and the amount of reflected light LR decreases. It is preferable that the LiDAR mounted on the transportation equipment VE can range a long distance within a possible extent even under such an environment. It is also conceivable to give up long distance ranging by LiDAR from the beginning according to visibility.

Therefore, in an environment where visibility is short and it is difficult to range a long distance, the ranging system according to the first arrangement uses a ranging parameter focusing on short ranging. Specifically, in a case where visibility is short, the ranging system 1 according to the first arrangement changes ranging parameters such as changing the number of integrated pixels or laser energy instead of decreasing the number of pixels or decreasing the frame rate. For example, in a case where only 200 m can be taken with respect to LiDAR in which a distance that can be ranged is 400 m, it is conceivable to set the number of pixels to 1/4. This numerical value corresponds to a value in which the number of pixels detected for a subject present at a position 400 m away from LiDAR is the same as the number of pixels of detected for the same subject present at a position 200 m away from LiDAR.

FIG. 19 is a graph illustrating an example of a difference in light receiving characteristics between the first comparative example and the first arrangement. In FIG. 19, the vertical axis represents the light reception amount, and the horizontal axis represents the maximum distance that can be ranged. 40 and 300 shown in the drawing indicate associated visibility numerical values. The result of the first comparative example illustrated in FIG. 19 corresponds to a case where the first setting described in the first arrangement is used. The result of the first arrangement illustrated in FIG. 19 corresponds to a case where the setting change operation is used. The longer the maximum distance that can be ranged, the higher the ranging performance.

As shown in FIG. 19, in the first arrangement, in a case where visibility is 300 m, the number of pixels is set to 1/4 and the frame rate is set to 1/√2 on the basis of at least one of the second to eighth settings. In addition, in the first arrangement, in a case where visibility is 40 m, the number of pixels is set to 1/16 and the frame rate is set to 1/2 on the basis of at least one of the second to eighth settings. As a result, in each of the case where visibility is 300 m and the case where visibility is 40 m, the ranging performance in the first arrangement is higher than that in the first comparative example. Specifically, in a case where visibility is 40 m, the distance that can be ranged is about 30 m in the first comparative example, whereas the distance that can be ranged is as long as 50 m in the first arrangement.

As described above, although depending on the configuration of the ranging apparatus 20, the ranging system 1 according to the first arrangement can range a distance longer than a case where the ranging parameter is fixed in a case where visibility is shortened. Therefore, the ranging system 1 according to the first arrangement can suppress deterioration in ranging performance depending on visibility.

<2> Second Arrangement

A second arrangement relates to a ranging apparatus 20 configured to remove a noise component in a waveform of a light receiving result of a ranging target on the basis of a previous light receiving result. Hereinafter, details of the ranging apparatus 20 according to the second arrangement will be mainly described on differences from the first arrangement.

<2-1> Configuration

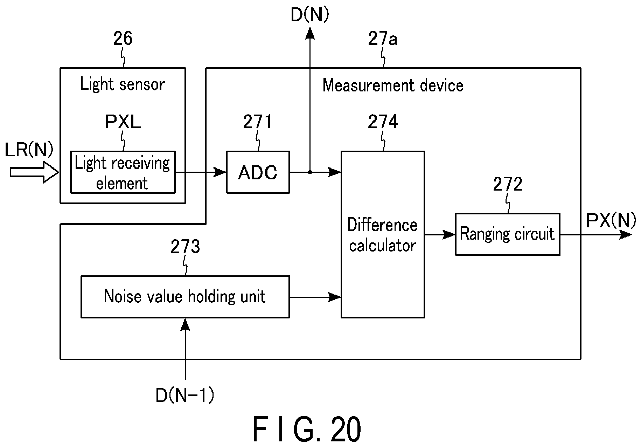

FIG. 20 is a schematic diagram illustrating an example of a configuration of a light sensor 26 and a measurement device 27a included in the ranging apparatus 20 according to the second arrangement. FIG. 20 illustrates a detailed configuration of the measurement device 27a associated with one light receiving element PXL irradiated with the reflected light LR (N). As illustrated in FIG. 20, the measurement device 27a includes, for example, an ADC 271, a ranging circuit 272, a noise value holding unit 273, and a difference calculator 274 corresponding to each light receiving element PXL of the light sensor 26.

The ADC 271 converts an output signal (light reception amount) of the light receiving element PXL irradiated with the reflected light LR (N) into a digital signal D (N) and outputs the digital signal D (N). The digital signal D (N) is time-series data having a value that changes for each time. The digital signal D (N) is transmitted to the difference calculator 274 and held in a buffer circuit (not illustrated). The noise value holding unit 273 reads the digital signal D (N - 1) of the previous reflected light LR (N) from the buffer circuit. Then, the noise value holding unit 273 transmits the digital signal D (N - 1) to the difference calculator 274 in synchronization with the digital signal D (N) output from the ADC 271.

The difference calculator 274 calculates a difference between the digital signal D (N) transmitted from the ADC 271 and the digital signal D (N - 1) transmitted from the noise value holding unit 273. Specifically, the difference calculator 274 subtracts the numerical value of the digital signal D (N - 1) from the numerical value of the digital signal D (N) at the same time until the fixed time tA with the emission time of each outgoing light LE as the start point time 0 in the difference calculation. Then, the difference calculator 274 transmits the digital signal subjected to the difference calculation to the ranging circuit 272.

The ranging circuit 272 generates distance data on the basis of a peak position of the digital signal for which difference calculation is performed by the difference calculator 274, and transmits the generated distance data to an image processor 15. As described above, in the second arrangement, the difference calculation using the digital signal D (N - 1) of the previous pixel is executed between the output of the ADC 271 and the ranging calculation by the ranging circuit 272. Other configurations of the ranging system 1 according to the second arrangement are similar to those of the first arrangement.

<2-2> Method for Processing Light Receiving Result

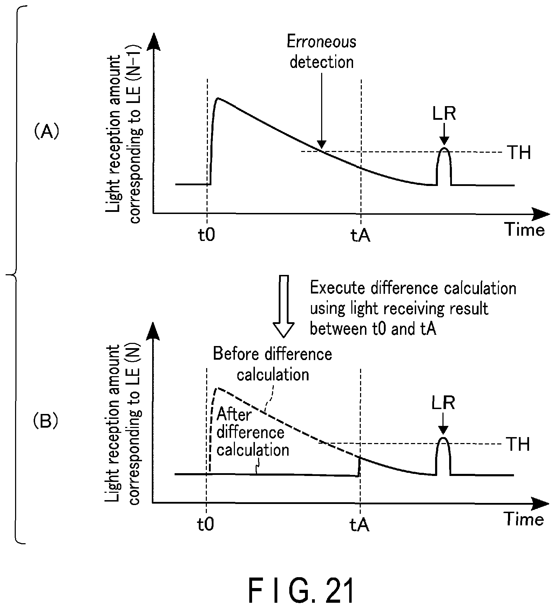

FIG. 21 is a schematic diagram illustrating an example of a light receiving result processing method of the ranging apparatus 20 according to the second arrangement. (A) of FIG. 21 illustrates a change in the light reception amount of the light sensor 26 corresponding to outgoing light LE (N - 1). (B) of FIG. 21 illustrates the case that the difference calculation is performed on the change in the light reception amount of the light sensor 26 corresponding to outgoing light LE (N). In the present example, it is assumed that fog is generated in the surrounding environment of the ranging system 1.

As illustrated in (A) of FIG. 21, when the outgoing light LE (N - 1) is emitted at time t0, the background noise affected by the fog is detected immediately after the emission. In this example, the reflected light LR is detected after the time tA. In a case where the detection threshold value TH is set as illustrated, erroneous detection occurs between the times t0 and tA before the reflected light LR is detected. For example, in a case where the detection threshold value is assumed to be the maximum value of the subject, the light reception amount is larger than the detection threshold value in a time shorter than the "erroneous detection" in the red characters, and the detection is performed erroneously.

On the other hand, as illustrated in (B) of FIG. 21, in the second arrangement, the difference calculation is executed using the light receiving result between the times t0 and tA. Between the times t0 and tA, large background noise is detected before the difference calculation, whereas after the difference calculation, background noise in a period from immediately after emission to the time tA is suppressed.

As described above, in the second arrangement, the measurement device 27 corrects the light receiving result of the light sensor 26 from the emission time of the outgoing light LE to the time tA on the basis of the light receiving result of the previous pixel PX, and ranges the distance to the subject OB on the basis of the corrected light receiving result. Other operations of the ranging apparatus 20 according to the second arrangement are similar to those of the first arrangement.

<2-3> Advantageous Effect of Second Arrangement

The fog signal, which is one of factors causing visibility to be short, is stable to some extent. Therefore, the LiDAR can estimate a signal corresponding to the fog in the data of the current light receiving result by using the data of the previous light receiving result.

Therefore, in the ranging apparatus 20 according to the second arrangement, the difference calculation based on the actual measurement value of the light reception amount of the previous pixel is executed. As a result, in the second arrangement, the influence of scattering by water at a short distance due to fog or the like can be canceled by the difference calculation. Therefore, the ranging apparatus 20 according to the second arrangement can suppress deterioration of ranging performance even in a case where short-distance background noise increases due to visibility being shortened due to fog or the like.

In the second arrangement, the value used for the difference calculation by the difference calculator 274 is not limited to the value of the previous pixel (that is, the digital signal D (N - 1)), and the value of the previous frame may be used. In this case, instead of the digital signal D (N - 1), the noise value holding unit 273 calculates an arithmetic value such as an average or a median for each time from time 0 to the fixed time tA of the digital signal D acquired in the previous frame, and transmits the arithmetic value to the difference calculator 274. Then, the difference calculator 274 executes arithmetic processing of the digital signal D (N) transmitted from the ADC 271 and the arithmetic value at each time transmitted from the noise value holding unit 273.

Furthermore, in the present example, the case where the timing at which the digital signal is transmitted is synchronized between the ADC 271 and the noise value holding unit 273 has been described, but the present invention is not limited thereto. The difference calculator 274 may include a buffer circuit that can temporarily hold the data of the digital signals D (N) and D (N - 1) to be subjected to the difference calculation.

<3> Third Arrangement

A third arrangement relates to a ranging apparatus 20 configured to remove a noise component in a waveform of a light receiving result of a ranging target on the basis of a combination of data of one point of a previous light receiving result and a predetermined function. Hereinafter, details of the ranging apparatus 20 according to the third arrangement will be mainly described on differences from the first and second arrangements.

<3-1> Configuration

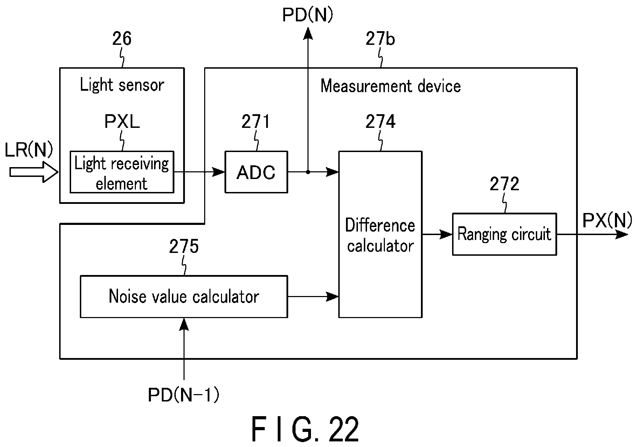

FIG. 22 is a schematic diagram illustrating an example of a configuration of a light sensor 26 and a measurement device 27b included in the ranging apparatus 20 according to the third arrangement. FIG. 22 illustrates a detailed configuration of the measurement device 27b associated with one light receiving element PXL irradiated with the reflected light LR (N). As illustrated in FIG. 22, the measurement device 27b includes an ADC 171, a ranging circuit 272, a difference calculator 274, and a noise value calculator 275 corresponding to each light receiving element PXL of the light sensor 26.

The ADC 271 converts an output signal (light reception amount) of the light receiving element PXL irradiated with the reflected light LR (N) into a digital signal D (N) and outputs the digital signal D (N). The digital signal D (N) includes point data PD (N) corresponding to a digital value of the light reception amount at a predetermined time. This predetermined time is set, for example, near time t0. The point data PD (N) is held in a buffer circuit (not illustrated). The noise value calculator 275 reads the point data PD (N - 1) of the previous reflected light LR (N) from the buffer circuit. Then, the noise value calculator 275 calculates time-series noise value data in a predetermined period on the basis of the point data PD (N - 1) and a predetermined function. Then, the noise value calculator 275 transmits the calculated time-series noise value data to the difference calculator 274.

The difference calculator 274 calculates a difference between the digital signal D (N) transmitted from the ADC 271 and the time-series noise value data transmitted from the noise value calculator 275. Specifically, the difference calculator 274 subtracts data associated with the same time between the digital signal D (N) and the time-series noise value data in the difference calculation. Then, the difference calculator 274 transmits the digital signal subjected to the difference calculation to the ranging circuit 272.

The ranging circuit 272 generates distance data on the basis of a peak position of the digital signal for which difference calculation is performed by the difference calculator 274, and transmits the generated distance data to an image processor 15. As described above, in the third arrangement, as in the second arrangement, the difference calculation using the noise value data based on the point data PD (N - 1) of the previous pixel and the predetermined function is executed between the output of the ADC 271 and the ranging calculation by the ranging circuit 272. Other configurations of the ranging system 1 according to the third arrangement are similar to those of the second arrangement.

<3-2> Method for Processing Light Receiving Result

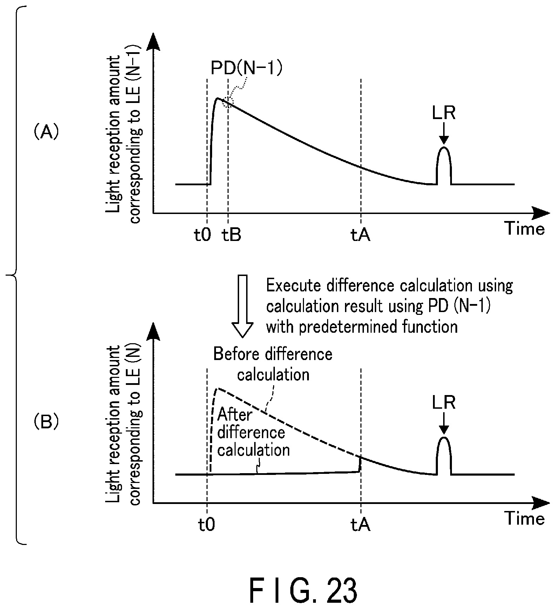

FIG. 23 is a schematic diagram illustrating an example of a light receiving result processing method of the ranging apparatus 20 according to the third arrangement. (A) of FIG. 23 illustrates a change in the light reception amount of the light sensor 26 corresponding to outgoing light LE (N - 1). (B) of FIG. 23 illustrates the case that the difference calculation is performed on the change in the light reception amount of the light sensor 26 corresponding to outgoing light LE (N). In the present example, it is assumed that fog is generated in the surrounding environment of the ranging system 1.

As illustrated in (A) of FIG. 23, when the outgoing light LE (N - 1) is emitted at time t0, the background noise affected by the fog is detected immediately after the emission. In this example, the reflected light LR is detected after the time tA, and erroneous detection may occur similarly to the second arrangement. On the other hand, in the third arrangement, the point data PD (N - 1) is acquired at the time tB corresponding to the outgoing light LE (N - 1).

Then, as illustrated in (B) of FIG. 21, in the third arrangement, the difference calculation using the calculation result using the point data PD (N - 1) with a predetermined function is executed. Between the times t0 and tA, large background noise is detected before the difference calculation, whereas background noise can be suppressed after the difference calculation. The period to which the difference calculation is applied may be a period from the time t0 to the time tA or a period from the time tB to the time tA.

As described above, in the third arrangement, at the time of ranging performed by associating with the outgoing light LE, the measurement device 27 corrects a portion corresponding to the predetermined period in the light receiving result of the light sensor 26 using the noise value data in the predetermined period calculated on the basis of the light receiving result at the time tB of the previous pixel (light receiving element PXL), and ranges the distance to the subject OB on the basis of the corrected light receiving result. Other operations of the ranging apparatus 20 according to the third arrangement are similar to those of the first arrangement.

<3-3> Advantageous Effect of Third Arrangement

In the ranging apparatus 20 according to the third arrangement, the difference calculation similar to that of the second arrangement is executed from the light receiving result of the previous pixel using the predetermined function and the point data PD (N - 1). As a result, in the third arrangement, the influence of scattering by water at a short distance due to fog or the like can be canceled by difference calculation. Therefore, the ranging apparatus 20 according to the third arrangement can suppress deterioration of ranging performance even in a case where short-distance background noise increases due to visibility being shortened due to fog or the like.

In the third arrangement, the value used for the noise value calculator 275 to calculate the noise value data is not limited to the value of the previous pixel (that is, the point data PD (N - 1)), and the value of the same pixel may be used. In addition, an average value in a predetermined period or the like may be used instead of the point data PD (N - 1). Furthermore, the noise value calculator 275 may use a value based on the value of the previous frame for calculation of the noise value data. In this case, the noise value holding unit 273 calculates time-series noise value data using a calculated value such as an average or a median value at a predetermined time of a plurality of pixels acquired in a previous frame instead of the point data PD (N - 1), and transmits a calculation result to the difference calculator 274. Then, the difference calculator 274 executes arithmetic processing of the digital signal D (N) transmitted from the ADC 271 and the arithmetic value at each time transmitted from the noise value calculator 275.

<4> Fourth Arrangement

A fourth arrangement relates to a ranging apparatus 20 configured to be able to change a determination threshold applied to a light receiving result of a ranging target on the basis of a previous light receiving result. Hereinafter, details of the ranging apparatus 20 according to the fourth arrangement will be mainly described on differences from the first to third arrangements.

<4-1> Configuration

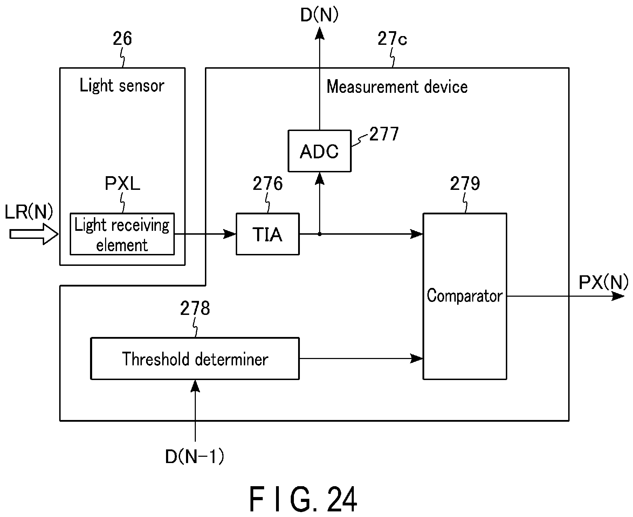

FIG. 24 is a schematic diagram illustrating an example of a configuration of a light sensor 26 and a measurement device 27c included in the ranging apparatus 20 according to the fourth arrangement. FIG. 24 illustrates a detailed configuration of the measurement device 27c associated with one light receiving element PXL irradiated with the reflected light LR (N). As illustrated in FIG. 24, the measurement device 27c includes, for example, a transimpedance amplifier (TIA) 276, an ADC 271, a threshold determiner 278, and a comparator 279 corresponding to each light receiving element PXL of the light sensor 26.

The TIA 276 amplifies and outputs an output signal (light reception amount) of the light receiving element PXL irradiated with the reflected light LR (N). The signal amplified by the TIA 276 is transmitted to each of the ADC 277 and the comparator 279. The ADC 277 converts the signal amplified by the TIA 276 into a digital signal D (N) and outputs the digital signal D (N). The digital signal D (N) is held in a buffer circuit (not illustrated).

The threshold determiner 278 reads the digital signal D (N - 1) of the previous reflected light LR (N) from the buffer circuit. Then, the threshold determiner 278 calculates a detection threshold value on the basis of the digital signal D (N - 1) and a predetermined function, and transmits the detection threshold value to the comparator 279. The detection threshold value is variably set according to time (subject distance). The comparator 279 determines whether the reflected light LR is received at each time on the basis of the output of the TIA 276 and the detection threshold value received from the threshold determiner 278. Other configurations of the ranging apparatus 20 according to the fourth arrangement are similar to those of the first arrangement.

<4-2> Method for Processing Light Receiving Result

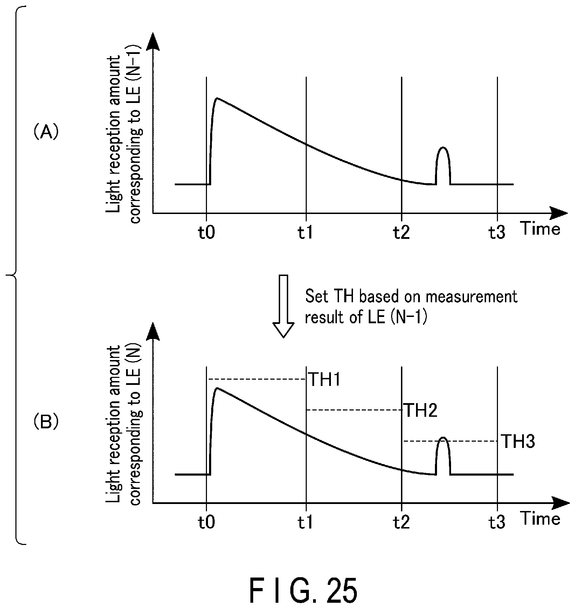

FIG. 25 is a schematic diagram illustrating an example of a light receiving result processing method of the ranging apparatus 20 according to the fourth arrangement. (A) of FIG. 25 illustrates a change in the light reception amount of the light sensor 26 corresponding to outgoing light LE (N - 1). (B) of FIG. 25 illustrates the case that the difference calculation is performed on the change in the light reception amount of the light sensor 26 corresponding to outgoing light LE (N). In the present example, it is assumed that fog is generated in the surrounding environment of the ranging system 1.

As illustrated in (A) of FIG. 25, when the outgoing light LE (N - 1) is emitted at time t0, the background noise affected by the fog is detected immediately after the emission. Then, in the present example, the threshold determiner 278 calculates the detection threshold value on the basis of the light receiving result in each of the period from time t0 to time t1, the period from time t1 to time t2, and the period from time t2 to time t3.

Then, as illustrated (B) of FIG. 25, in the fourth arrangement, ranging is performed using the detection threshold value for each period calculated on the basis of the outgoing light LE (N - 1). Specifically, in the present example, the threshold determiner 278 sets the detection threshold value TH1 at times t0 to t1, sets the detection threshold value TH2 at times t1 to t2, and sets the detection threshold value TH3 at times t2 to t3.

The detection threshold values TH1 to TH3 are values different from each other and are values corresponding to the magnitude of the background noise. For example, the detection threshold value TH is set to a higher value as the background noise is larger. As a result, in each period in which the detection threshold value TH is different, the influence of the background noise on the detection of the reflected light LR is suppressed. In the fourth arrangement, the unit length of the period in which the detection threshold value TH is changed can be appropriately changed.

As described above, in the fourth arrangement, at the time of raging performed by associating with the outgoing light LE, the measurement device 27 calculates the detection threshold values for determining the distance for each of a plurality of periods on the basis of the light receiving result of the previous pixel (light receiving element PXL), and ranges the distance to the subject OB using the detection threshold values for each of the plurality of periods. Other operations of the ranging apparatus 20 according to the fourth arrangement are similar to those of the first arrangement.

<4-3> Advantageous Effect of Fourth Arrangement

The ranging apparatus 20 according to the fourth arrangement uses a light receiving result of a previous pixel and performs ranging using a variable detection threshold value TH corresponding to time. As a result, the ranging apparatus 20 according to the fourth arrangement can suppress deterioration of ranging performance even in a case where short-distance background noise increases due to visibility being shortened due to fog or the like.

Note that, in the present example, the case where the threshold determiner 278 determines the detection threshold value on the basis of the digital signal D (N) has been exemplified, but the present invention is not limited thereto. As in the third arrangement, the threshold determiner 278 may determine the detection threshold value on the basis of digital data at a predetermined time in the digital signal D (N - 1). In the fourth arrangement, the value used by the threshold determiner 278 to calculate the detection threshold value is not limited to the value of the previous pixel (that is, the digital signal D (N - 1)), and the value of the previous frame may be used. In this case, the threshold determiner 278 calculates the detection threshold value on the basis of, instead of the digital signal D (N - 1), an arithmetic value such as an average or a median for each time from time 0 to fixed time tA of the digital signal D acquired in the previous frame.

<5> The Fifth Arrangement

A fifth arrangement relates to a visibility calculation method using a ranging apparatus 20 (LiDAR). Hereinafter, details of the ranging system 1 according to the fifth arrangement will be mainly described on differences from the first to fourth arrangements.

<5-1> Configuration

The following is an explanation of a ranging system 1 according to the fifth arrangement.

<5-2-1> Ranging Target of Ranging System 1

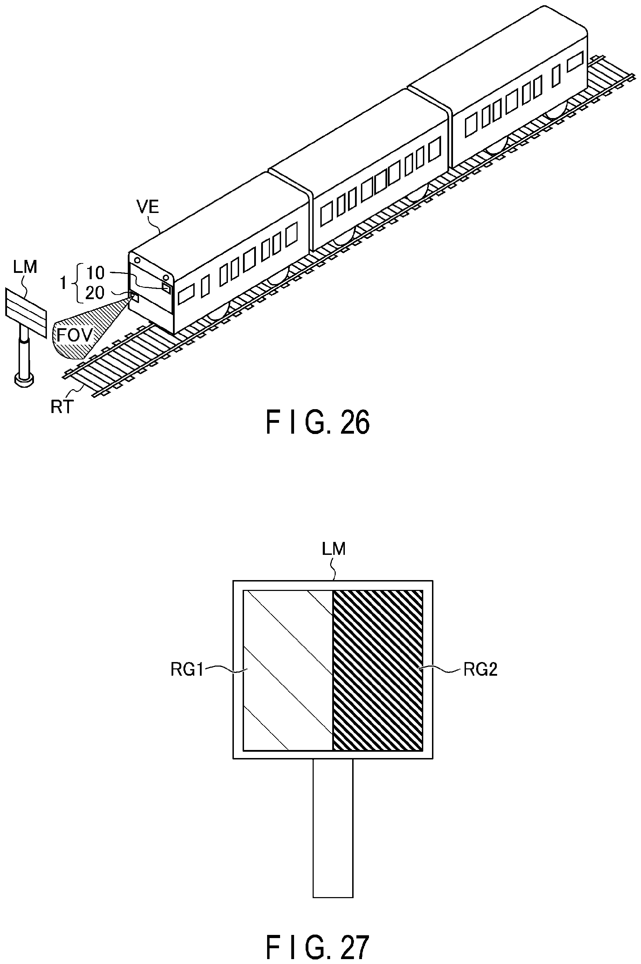

FIG. 26 is a schematic diagram illustrating an example of a configuration of the ranging system 1 according to the fifth arrangement. As illustrated in FIG. 26, a landmark LM is arranged on a movement route of a transportation equipment VE including the ranging system 1. The landmark LM is, for example, a sign provided to indicate a stop position of the transportation equipment VE in a case where the transportation equipment VE is a railway vehicle. In this case, the transportation equipment VE can control its own stop position by measuring the relative position with respect to the landmark LM using the ranging system 1. The landmark LM may be a utility pole, another transportation equipment VE, or the like. An information processing apparatus 10 may grasp the arrangement of the landmark LM on the basis of the information stored in a route information database 34.

<5-2-2> Configuration of Landmark LM

FIG. 27 is a schematic diagram illustrating an example of a configuration of the landmark LM used in the ranging system 1 according to the fifth arrangement. As illustrated in FIG. 27, the landmark LM may include two types of measurement regions RG. A first measurement region RG1 and a second measurement region RG2 are regions each having different reflectance with respect to the laser light (outgoing light LE) emitted from a ranging apparatus 20. In the present arrangement, a case where the reflectance for the outgoing light LE is lower in the second measurement region RG2 than in the first measurement region RG1 will be described. The first measurement region RG1 and the second measurement region RG2 may be arranged and configured to be distinguishable by the ranging system 1 on the landmark LM. Other configurations of the ranging system 1 according to the fifth arrangement are similar to those of the first arrangement.

<5-2> Operation

Next, an operation of the ranging system 1 according to the fifth arrangement will be explained.

<5-2-1> Regarding Fog Detection

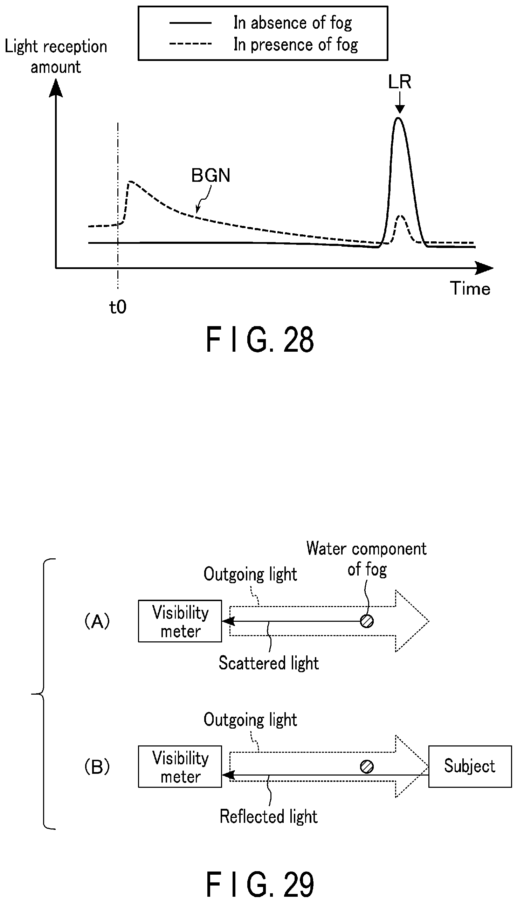

FIG. 28 is a schematic view illustrating an example of a light receiving result according to the presence or absence of fog. In FIG. 28, the time-series data of the light receiving result of the ranging apparatus 20 in the absence of fog is indicated by a solid line, and the time-series data of the light receiving result of the ranging apparatus 20 in the presence of fog is indicated by a broken line. Time t0 indicates the emission time of the outgoing light LE by the ranging apparatus 20.
As illustrated in FIG. 28, a large peak is formed at the detection time of the reflected light LR in the change in the light reception amount in the absence of fog. On the other hand, the change in the light reception amount in the presence of the fog has a smaller peak than that in the absence of the fog. Further, in the presence of fog, light based on scattering by water is detected near time t0, that is, at a short distance. Such background noise BGN may cause erroneous ranging. In addition, in a case where the fog becomes dense and the light amount of the reflected light LR decreases, the light reception amount of the reflected light LR by the ranging apparatus 20 decreases, and the distance that can be measured deteriorates or ranging becomes difficult. The light reception amount can be calculated by the following Expression (1).
[Expression 1]

$$Y \propto \frac{A}{X^2} * 0.05^{\left(2*\frac{X}{B}\right)} \qquad \cdot \cdot \cdot (1)$$

In Expression (1), Y represents a light reception amount. In Expression (1), X represents a subject distance. In Expression (1), A represents a variable. For example, A is a product of the amount of outgoing light, the light receiving efficiency (including electricity), and the subject reflectance. That is, A can change according to the light intensity of a laser diode 23 or the reflectance of the subject irradiated with the outgoing light LE. In Expression (1), B indicates visibility.
In Expression (1), if the subject distance, the subject reflectance, and the ranging parameter of LiDAR are known, visibility can be measured by measuring the light reception amount at one point. According to Expression (1), for example, the light reception amount w in a case where visibility is infinite and the subject distance is 400 m is substantially the same as the light reception amount in a case where visibility is 40 m and the subject distance is 33 m. That is, in this example, even if the LiDAR is capable of ranging 400 m normally, the LiDAR can range only 33 m in the fog. For this reason, as LiDAR, it is preferable that the ranging performance is improved as much as possible even in a fog environment, that is, in an environment where visibility is short.
FIG. 29 is a schematic diagram illustrating an example of the visibility measurement method. As a visibility calculation method, for example, there are a backscattering method as illustrated in (A) of FIG. 29 and a method by using a subject as illustrated in (B) of FIG. 29. In the backscattering method, a visibility meter emits outgoing light, receives scattered light from a water component of fog, and calculates visibility in a surrounding environment on the basis of a result of receiving the scattered light. In the backscattering method, it is necessary that the subject reflecting the outgoing light is not included in the portion used for calculating visibility in the light receiving result. On the other hand, in the method by using a subject, the visibility meter emits outgoing light, receives reflected light from the subject, and calculates visibility in the surrounding environment on the basis of the receiving result of the reflected light. In the subject using method, in a case where the fog is too deep, that is, visibility is too short, the subject cannot be detected, and visibility may not be calculated. That is, upon calculating visibility, appropriate visibility calculation methods are different depending on the length of visibility. Therefore, the ranging system 1 according to the fifth arrangement is configured to selectively use a plurality of types of visibility calculation methods in the visibility calculating operation.

<5-2-2> Visibility Calculating Operation

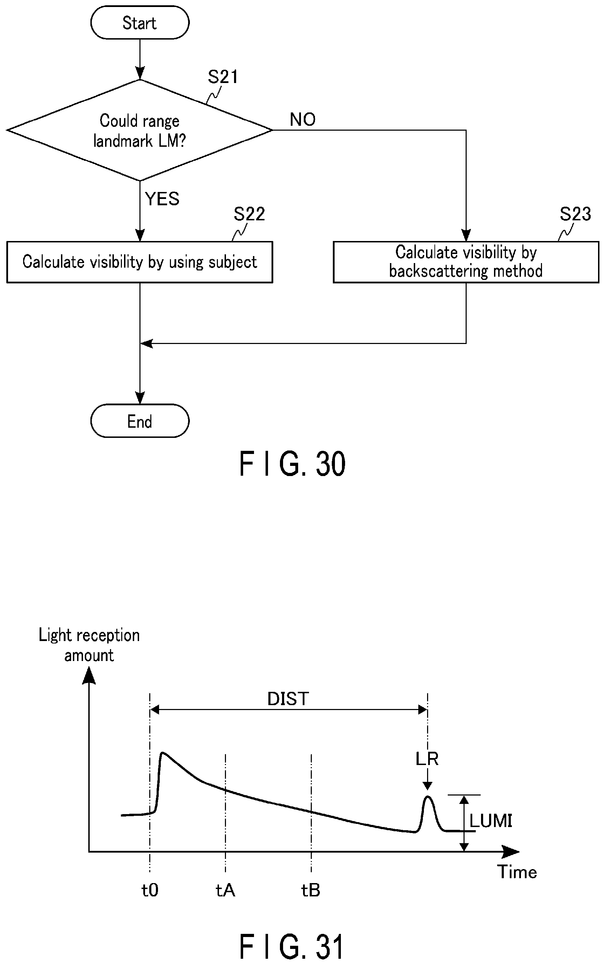

FIG. 30 is a flowchart illustrating an example of visibility calculating operation of the ranging system 1 according to the fifth arrangement. The following is an explanation of a visibility calculating operation of the ranging system 1 according to the fifth arrangement with reference to FIG. 30.
The ranging system 1 starts (Start) a visibility calculating operation on the basis of a user operation, a predetermined schedule, or the like. In the visibility calculating operation, the ranging system 1 first checks whether the distance to the landmark LM has been measured (S21). In a case where the distance to the landmark LM has been measured (S21: YES), the distance ranging system 1 calculates visibility by using a subject (S22). On the other hand, in a case where the distance to the landmark LM cannot be measured (S21: NO), the ranging system 1 calculates visibility by the backscattering method (S23). When the processing of S22 or S23 is finished, the ranging system 1 ends a series of processing in FIG. 30 (End).

As the landmark LM, a stopping object arranged in the vicinity of the route as illustrated in FIGS. 26 and 27 is not necessarily used. The ranging system 1 may use a subject moving around the ranging system 1 as a subject used for calculating visibility. For example, in a case where the transportation equipment VE is an automobile, another automobile traveling ahead may be used instead of the landmark LM as a subject used for visibility calculation.

<5-2-3> Visibility Calculation Method by Backscattering

Next, a visibility calculation method by the backscattering method will be described.

FIG. 31 is a schematic diagram illustrating an example of a light receiving result processing method of the ranging apparatus 20 according to the fifth arrangement. FIG. 31 illustrates time-series data of the light receiving result of the ranging apparatus 20 in the presence of fog. Time t0 indicates the emission time of the outgoing light LE by the ranging apparatus 20. The times tA and tB indicate periods of light receiving results used for calculating visibility. "LUMI" indicates the luminance at which the reflected light LR is detected. "DIST" indicates a ranging result.

In a case where visibility is calculated by the backscattering method, it is necessary that no other subject is detected in the period from the time tA to the time tB in addition to the landmark LM. For example, in a case where the ranging result DIST corresponding to the specific pixel PX is greater than or equal to a value obtained by adding the distance corresponding to the time tB and the fixed value $\alpha$, it is proved that an object is not detected with certainty in the period from the time tA to the time tB. In this case, the ranging apparatus 20 calculates an integral value (average) or a median value of the light reception amount in the period from the time tA to the time tB. Then, the ranging apparatus 20 can estimate visibility by referring to a table that associates the calculated value with visibility. Such a table is prepared in advance and stored in either the information processing apparatus 10 or the ranging apparatus 20. In the present example, the case where the ranging apparatus calculates visibility on the basis of the light receiving result has been described, but visibility may be calculated by the information processing apparatus 10.

<5-2-4> Visibility Calculation Method by Using Subject

Next, a visibility calculation method by using a subject will be described. Assuming that the same LiDAR (ranging apparatus 20) is used to range the same subject at a plurality of distances, the following Expression (2) is derived from Expression (1).
[Expression 2]

$$Y = \frac{A}{X^2} * 0.05^{\left(2 * \frac{X}{B}\right)} \qquad \cdot \cdot \cdot (2)$$

Y in Expression (2) represents the light reception amount as in Expression (1). X in Expression (2) represents a subject distance as in Expression (1). A in Expression (2) represents a variable as in Expression (1). B in Expression (2) represents visibility as in Expression (1). In Expression (2), as in Expression (1), if the subject distance, the subject reflectance, and the ranging parameter of LiDAR are known, visibility can be measured by measuring the light reception amount at one point. When the Expression (2) is transformed using the natural logarithm, the following Expression (3) is derived.
[Expression 3]

$$\log(Y * X^2) = \log(0.05) * \frac{2}{B} * X + \log(A) \qquad \cdot \cdot \cdot (3)$$

Thus, Expression (3) is a linear expression of log $(Y * X^2)$ and X. Therefore, calculation using the least squares method can be performed by ranging the subject at a plurality of distances. This calculation becomes robust against changes in the subject, the ranging parameters of the LiDAR, the transmittance of the emission window, and the like, and thus is superior to the case of calculating visibility on the basis of ranging data of one point. The ranging system 1 provided in the transportation equipment VE can easily obtain a plurality of ranging results for the same subject having a relative speed, and can calculate visibility in the surrounding environment. In the present specification, the "relative speed" corresponds to the difference between the speed of the transportation equipment VE and the speed of the subject. In the fifth arrangement, a case has been exemplified where visibility is calculated by moving the transportation equipment VE to a plurality of distances with respect to a subject and ranging distances of the plurality of distances with respect to the same subject by the LiDAR mounted on the transportation equipment VE. The present invention is not limited thereto, and the ranging system 1 according to the fifth arrangement can range the same subject at a plurality of distances according to the lapse of time as long as the transportation equipment VE and the subject do not have the same speed, that is, a relative speed occurs between the transportation equipment VE and the subject. Therefore, the visibility calculating operation in the fifth arrangement is not limited to the case where the transportation equipment VE moves, and ranging of a plurality of distances may be realized by the movement of the subject.

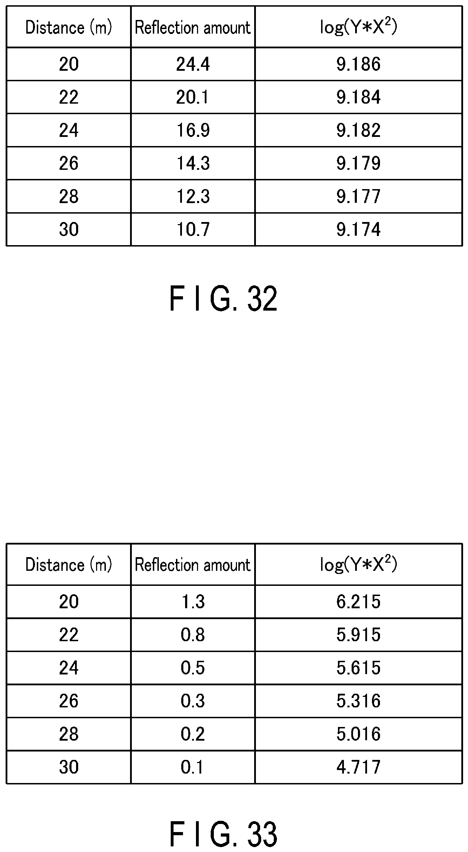

FIG. 32 is a table illustrating a first example of measurement results to which the visibility calculation method using a subject is applied in the ranging system 1 according to the fifth arrangement. In the first example illustrated in FIG. 32, the reflection amount is 24.4 and $\log (Y * X^2)$ is 9.186 at a distance of 20 m. The reflection amount is 20.1 and $\log (Y * X^2)$ is 9.184 at a distance of 22 m. The reflection amount is 16.9 and $\log (Y * X^2)$ is 9.182 at a distance of 24 m. The reflection amount is 14.3 and $\log (Y * X^2)$ is 9.179 at a distance of 26 m. The reflection amount is 12.3 and $\log (Y * X^2)$ is 9.177 at a distance of 28 m. The reflection amount is 10.7 and $\log (Y * X^2)$ is 9.174 at a distance of 30 m. When the least squares method is used on the basis of these calculation results, $2/B * \log (0.05) = -0.0012$ and $\log (A) = 9.21034$ are obtained. Therefore, it is calculated that the variable A = 10,000 and the visibility B = 5,000.

FIG. 33 is a table illustrating a second example of measurement results to which the visibility calculation method using a subject is applied in the ranging system according to the fifth arrangement. In the second example illustrated in FIG. 33, the reflection amount is 1.3 and $\log (Y * X^2)$ is 6.215 at a distance of 20 m. The reflection amount is 0.8 and $\log (Y * X^2)$ is 5.915 at a distance of 22 m. The reflection amount is 0.5 and $\log (Y * X^2)$ is 5.615 at a distance of 24 m. The reflection amount is 0.3 and $\log (Y * X^2)$ is 5.316 at a distance of 26 m. The reflection amount is 0.2 and $\log (Y * X^2)$ is 5.016 at a distance of 28 m. The reflection amount is 0.1 and $\log (Y * X^2)$ is 4.717 at a distance of 30 m. When the least squares method is used on the basis of these calculation results, $2/B * \log (0.05) = -0.1498$ and $\log (A) = 9.21034$ are obtained. Therefore, it is calculated that the variable A = 10,000 and the visibility B = 40.

(Method of Using Landmark LM)

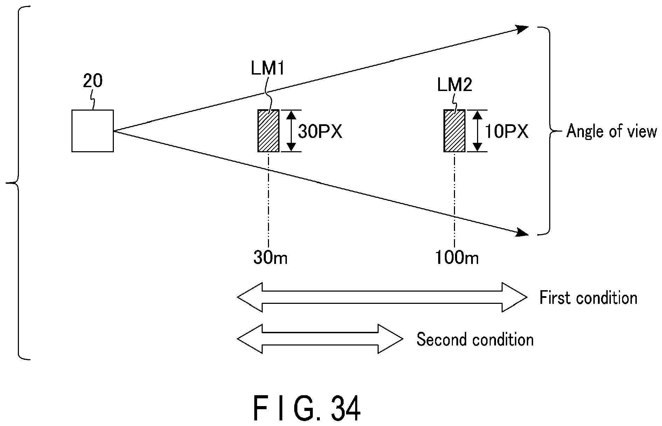

FIG. 34 is a schematic diagram illustrating an example of a relationship between the positions of the landmarks LM and the number of pixels. FIG. 34 illustrates the positions of the landmarks LM arranged at the angle of view scanned by the ranging apparatus 20. As illustrated in FIG. 34, the landmark LM1 located at a distance of 30 m from the ranging apparatus 20 is detected by, for example, 30 pixels PX. On the other hand, the landmark LM2 located at a distance of 100 m from the ranging apparatus 20 is detected by, for example, 10 pixels PX.

As described above, in a case where the landmark LM (subject) is far from the ranging apparatus 20, the number of pixels corresponding to the landmark LM in the image decreases, and it becomes difficult to detect the landmark LM. In the case of detecting the landmark LM at a long distance, the size of the landmark LM is preferably designed to be large. In addition, in a case where the landmark LM is extremely close to the ranging apparatus, it may be difficult to perform ranging because the landmark LM does not enter the angle of view or the light reception amount becomes too large.

In the ranging system 1, the same landmark LM may be ranged at a plurality of distances in order to calculate visibility. Therefore, it is preferable that the extent in which the distance to the landmark LM is ranged is determined in advance according to the size of the landmark LM. In addition, the extent to be ranged is preferably set as narrow as possible also from the viewpoint of ease of data collection.

In a first condition illustrated in FIG. 34, both the landmark LM1 arranged at 30 m and the landmark LM2 arranged at 100 m can be detected. However, under the first condition, it is necessary to increase the size of the landmark LM at a long distance in order to detect the landmark LM. On the other hand, the second condition illustrated in FIG. 34 is configured to enable ranging of the landmark LM within an extent including 30 m and narrower than the first condition. As described above, the extent in which the distance to the landmark LM is ranged is changed from the first condition to the second condition, so that the size of the landmark LM can be designed to be small.

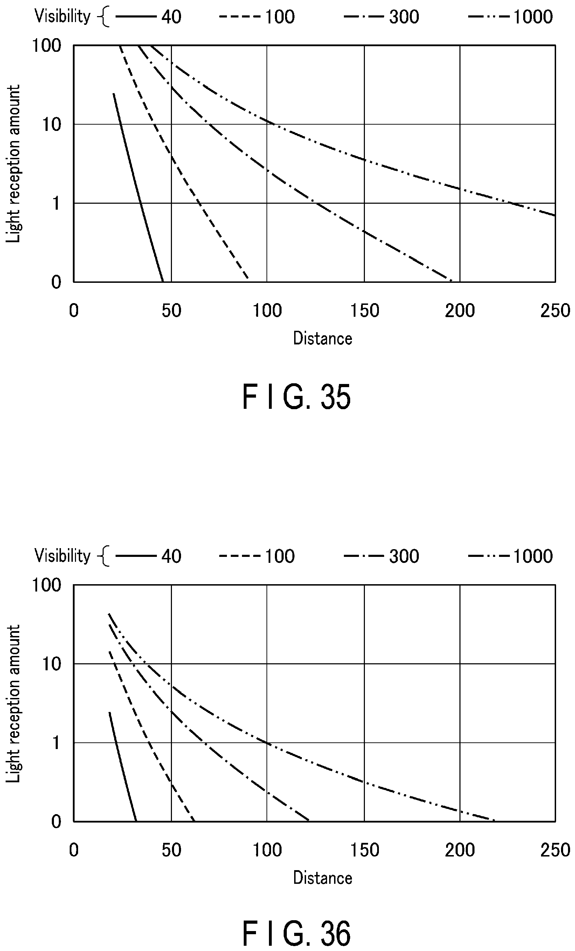

FIG. 35 is a schematic diagram illustrating an example of a relationship between the light reception amount and the distance in a case where the measurement region RG1 of the landmark LM is ranged in four conditions with different visibility. FIG. 36 is a schematic diagram illustrating an example of a relationship between the light reception amount and the distance in a case where the measurement region RG2 of the landmark LM is ranged in four conditions with different visibility. Each of FIGS. 35 and 36 shows the relationship between the light reception amount and the distance that can be ranged in a case where visibility is 40 m, 100 m, 300 m, or 1,000 m. In addition, in each of FIGS. 35 and 36, it is assumed that the extent in which the light reception amount is 1 to 10 corresponds to the extent of the light reception amount that can be used for ranging, and the visibility measurement extent is 40 to 1,000 m. In addition, it is assumed that the reflectance of the measurement region RG1 with respect to the outgoing light LE is 10 and the reflectance of the measurement region RG2 is 1.

As illustrated in FIG. 35, in a case where ranging for calculating visibility is performed only for the measurement region RG1, visibility from 40 m to 1,000 m can be calculated by measuring a distance extent of 24 m to 229 m, for example.

On the other hand, under the present condition, the size of the landmark LM is required to be designed to be large due to the wide distance extent.

As illustrated in FIG. 36, in a case where ranging for calculating visibility is performed only for the measurement region RG2, visibility from 100 m to 1,000 m can be calculated by measuring a distance extent of 24 m to 106 m, for example. On the other hand, in this condition, in a case where visibility is 40 m, the number of points that can be measured is small, and thus it is difficult for the ranging apparatus 20 to calculate visibility.

Therefore, in the ranging system 1 according to the fifth arrangement, ranging data of both of the two measurement regions RG1 and RG2 of the landmark LM is acquired, and the more preferable ranging data is used for visibility calculation. For example, if both the measurement region RG1 (reflectance = 10) and the measurement region RG2 (reflectance = 1) can be used, the ranging apparatus 20 can calculate visibility of 40 m to 1,000 m in a distance extent of 24 m to 106 m. As a result, in the present example, the size of the landmark LM, that is, the area of the portion where the measurement regions RG1 and RG2 are arranged in the landmark LM can be designed to be smaller than that in the case of ranging the distance extent of 24 m to 229 m.

As described above, the ranging system 1 according to the fifth arrangement can acquire the first ranging result obtained on the basis of the reflected light from the first measurement region RG1 of the same subject and the second ranging result obtained on the basis of the reflected light from the second measurement region RG2 of the same subject, and calculate visibility in the surrounding environment using both the first ranging result and the second ranging result.

<5-3> Advantageous Effect of Fifth Arrangement

Transportation equipment VE such as a railway vehicle is required to detect rain and fog. In the visibility calculation by the backscattering method, it is a precondition that a visibility meter is used in a fixed manner and that no object is present in the measurement area. However, conventional visibility meters do not have the concept of time. That is, the conventional visibility meters cannot ensure that no object is present in the measurement area. In addition, visibility calculation using transmittance requires a certain distance, and thus the size of the visibility meter becomes too large.

Therefore, the ranging system 1 according to the fifth arrangement is configured to be able to estimate visibility on the basis of light scattered by a water component in the air or reflected light from a subject. Then, the ranging system 1 calculates visibility by selectively using both the backscattering method and the method using a subject. For example, since LiDAR performs ranging using a concept of time, it is possible to ensure that no object exists within a predetermined distance (short distance). Therefore, the ranging system 1 can calculate visibility by the backscattering method while ensuring that there is no subject.

In addition, the ranging system 1 calculates visibility by the least squares method using a plurality of ranging results by the method using a subject. Thus, the ranging system 1 can calculate visibility with higher accuracy than in the case of one-point ranging. Since the transportation equipment VE including the ranging system 1 is a moving object, it is possible to easily secure a ranging extent for calculating visibility by using a subject. Furthermore, the traveling route of the railway vehicle is suitable for arranging the landmark LM that can be used for calculating visibility. Since the landmark LM can also be used for other purposes, the installation cost can also be suppressed.

Furthermore, the calculation of visibility using a subject in the fifth arrangement is not dependent on reflectance, and thus can also be applied to an unknown object. In a case where the subject is a known subject (for example, landmark LM), since the ranging system 1 can also measure the reflection amount of the subject, it is also possible to detect aged deterioration of the subject. That is, by acquiring a plurality of distances, the ranging system 1 can reduce the influence of aging of the subject on visibility calculation. For example, the ranging system 1 can also be used for abnormality detection of the landmark LM.

As described above, the ranging system 1 according to the fifth arrangement can implement LiDAR having a function of calculating visibility. The calculated visibility is referred to, for example, in a case where the ranging parameters described in the first to fourth arrangements are changed. Therefore, the ranging system 1 according to the fifth arrangement can also suppress deterioration in ranging performance according to visibility.

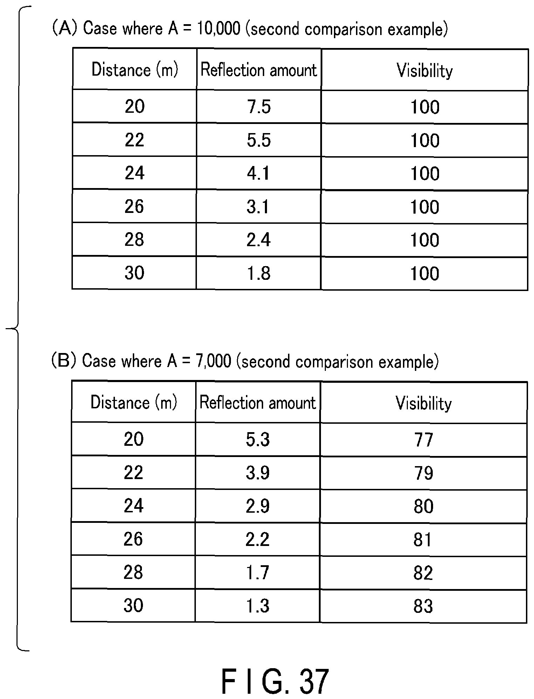

Note that the conventional visibility meter can calculate visibility by measuring one point, for example. Meanwhile, the ranging system 1 according to the fifth arrangement performs ranging at a plurality of distances and calculates visibility. Hereinafter, with reference to FIGS. 37A and 37B, the difference between the calculation of visibility based on the measurement results of one point and the calculation of visibility based on the measurement results of multiple points will be described.

FIG. 37 depicts tables illustrating an example of a measurement result in a second comparative example. (A) of FIG. 37 corresponds to the measurement result in a case where the visibility calculating operation of the second comparative example is applied and the variable A = 10,000. (B) of FIG. 37 corresponds to the measurement result in a case where the visibility calculating operation of the second comparative example is applied and the variable A = 7,000. In the second comparative example, visibility is calculated on the basis of a ranging result at one point using Expression (1).

In one example shown in (A) of FIG. 37, the reflection amount is 7.5 and the result of visibility calculation is 100 m at a distance of 20 m. The reflection amount is 5.5 and the result of visibility calculation is 100 m at a distance of 22 m. The reflection amount is 4.1 and the result of visibility calculation is 100 m at a distance of 24 m. The reflection amount is 3.1 and the result of visibility calculation is 100 m at a distance of 26 m. The reflection amount is 2.4 and the result of visibility calculation is 100 m at a distance of 28 m.

The reflection amount is 1.8 and the result of visibility calculation is 100 m at a distance of 30 m.

On the other hand, in one example shown in FIG. 37B, the reflection amount is 5.3 and the result of visibility calculation is 77 m at a distance of 20 m. The reflection amount is 3.9 and the result of visibility calculation is 79 m at a distance of 22 m. The reflection amount is 2.9 and the result of visibility calculation is 80 m at a distance of 24 m. The reflection amount is 2.2 and the result of visibility calculation is 81 m at a distance of 26 m. The reflection amount is 1.7 and the result of visibility calculation is 82 m at a distance of 28 m. The reflection amount is 1.3 and the result of visibility calculation is 83 m at a distance of 30 m. That is, in the second comparative example, a measurement error of 20% occurs as a result of a 30% change in the light reception amount.

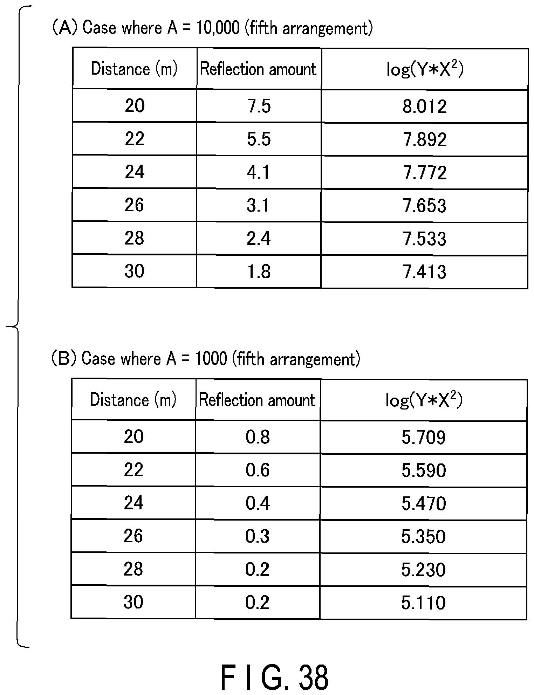

FIG. 38 depicts tables illustrating an example of a measurement result in the fifth arrangement. (A) and (B) of FIG. 38 correspond to measurement results under conditions where the light reception amounts are 10 times different in a case where the visibility calculating operation described in the fifth arrangement is applied.

In one example illustrated in (A) of FIG. 38, the reflection amount is 7.5 and $\log (Y * X^2)$ is 8.012 at a distance of 20 m. The reflection amount is 5.5 and $\log (Y * X^2)$ is 7.892 at a distance of 22 m. The reflection amount is 4.1 and $\log (Y * X^2)$ is 7.772 at a distance of 24 m. The reflection amount is 3.1 and $\log (Y * X^2)$ is 7.653 at a distance of 26 m. The reflection amount is 2.4 and $\log (Y * X^2)$ is 4.533 at a distance of 28 m. The reflection amount is 1.8 and $\log (Y * X^2)$ is 7.413 at a distance of 30 m. When the least squares method is used on the basis of these calculation results, $2/B * \log (0.05) = -0.0599$ and $\log (A) = 9.21034$ are obtained. Therefore, it is calculated that the variable A = 10,000 and the visibility B = 100.

On the other hand, in one example illustrated in (B) of FIG. 38, the reflection amount is 0.8 and $\log (Y * X^2)$ is 5.709 at a distance of 20 m. The reflection amount is 0.6 and $\log (Y * X^2)$ is 5.590 at a distance of 22 m. The reflection amount is 0.4 and $\log (Y * X^2)$ is 5.470 at a distance of 24 m. The reflection amount is 0.3 and $\log (Y * X^2)$ is 5.350 at a distance of 26 m. The reflection amount is 0.2 and $\log (Y * X^2)$ is 5.230 at a distance of 28 m. The reflection amount is 0.2 and $\log (Y * X^2)$ is 5.110 at a distance of 30 m. When the least squares method is used on the basis of these calculation results, $2/B * \log (0.05) = -0.0599$ and $\log (A) = 6.90776$ are obtained. Therefore, it is calculated that the variable A = 1,000 and the visibility B = 100. As described above, in the fifth arrangement, even if the light reception amount is 1/10 times, visibility calculation accuracy is equivalent. That is, the ranging system 1 according to the fifth arrangement can achieve higher visibility calculation accuracy than a conventional visibility meter.

<6> Others

The arrangements described above may be used in combination in a possible range. For example, the fifth arrangement may be combined with any of the first to the fourth arrangements. Any of the ranging parameters of the second to fourth arrangements may be applied by the setting change operation described in the first arrangement.

The first arrangement illustrates a case where the ranging parameter is changed according to visibility, but the present invention is not limited thereto. The ranging system 1 may control the ranging parameter according to the reflection amount of a specific subject measured on the basis of the ranging result. In this case, for example, the storage device 12 of the information processing apparatus 10 further stores a table in which the reflection amount (light reception amount) of the specific distance of the specific subject and the ranging parameter are associated with each other. Then, the information processing apparatus 10 can change (control) the ranging parameter of the ranging apparatus 20 by measuring the reflectance of the specific subject on the basis of the ranging operation and referring to the table using the measured reflectance. A plurality of specific subjects may be used. The specific distance of the specific subject may be plural. The specific subject may be specified on the basis of the route information database 34 or may be specified on the basis of the information acquired by the information collecting device 11. In this example, visibility may or may not be calculated.

As long as the operations described in the above arrangements can be achieved, part of functions of the information processing apparatus 10 may be installed in the ranging apparatus 20. For example, the ranging apparatus 20 may achieve each of the functions of the information processing parts 101, the routing information acquisition part 104, the line detecting part 106, and the object recognition part 107. Part of functions of the ranging controller 21 may be provided in the light sensor 26 and/or the measurement device 27. In this manner, the ranging apparatus 20 can timely execute minute operations. Classification of the structures explained in the arrangements may be other classifications as long as the operations described in the arrangements can be achieved. The setting changing operation described in the first arrangement and the visibility calculating operation described in the fifth arrangement may be realized achieved by an embedded computer including a CPU, a memory, a bus, and an input/output circuit (I/O).

The CPU included in the ranging system 1 may be another circuit. For example, a MPU (Micro Processing Unit) or the like may be used instead of the CPU. Each of processes described in the arrangements may be achieved by dedicated hardware. In each of the arrangements, the processing executed by software and the processing executed by hardware may exist in a mixed manner, or only one of them may exist. The ranging controller 21 and/or the CPU may also be referred to as "control circuit" and/or "processor". The measurement device 27 may also be referred to as "measurement circuit". The image processor 15 may also be referred to as "image processing circuit". The laser diode 23 may also be referred to as "light source".

The arrangements described above illustrate the case where the ranging apparatus 20 executes multi-channel raster scan, but other scanning methods may be used. For example, the ranging apparatus 20 may use "raster scan", "multi-channel scan", and/or "OPA method (Optical Phased Array)", as other scanning methods. Specifically, it suffices that the ranging apparatus 20 can adjust the ranging direction (position of FOV) by, for example, adjusting the emission timings of the pulse laser, in a case of using either a mechanical method or the OPA method is used as the scanning method.

Clause 1. A ranging apparatus comprising;

a light source (23) configured to emit a first laser light (LE);
a light sensor (26) configured to detect a second laser light (LR) corresponding to the first laser light reflected by an external subject;
a measurement circuit (27) configured to range a distance to the subject on a basis of a timing at which the light source emits the first laser light and a timing at which the light sensor detects the second laser light; and
a control circuit (21) configured to measure a reflection amount of the subject on a basis of a ranging result, and change a ranging parameter according to information using a measured reflection amount.

Clause 2. The ranging apparatus of clause 1, wherein

the information corresponds to visibility information in a surrounding environment, and
the control circuit is further configured to calculate the visibility on a basis of the measured reflection amount.

Clause 3. The ranging apparatus of clause 1, wherein

the information is a table in which a reflection amount of the subject and the ranging parameter are associated with each other, and
the control circuit changes the ranging parameter with reference to the information on a basis of the measured reflection amount.

Clause 4. The ranging apparatus of clause 1, wherein
the control circuit is further configured to reduce the number of times of the first laser light emitted per frame in the ranging and increase energy of the first laser light according to the information.
Clause 5. The ranging apparatus of clause 1, wherein
the control circuit is configured to reduce a frame rate in the ranging and increase energy of the first laser light according to the information.
Clause 6. The ranging apparatus of clause 1, wherein

the light sensor includes a plurality of light receiving elements (PXL) configured to be capable of outputting a current based on intensity of applied light, and
the control circuit is further configured to add output signals of a set of two or more of light receiving elements among the light receiving elements according to the information and output the added output signals to the measurement circuit.

Clause 7. The ranging apparatus of clause 6, wherein

the measurement circuit further includes an analog-to-digital converter (271), and
the added output signals of the set of two or more light receiving elements is analog-to-digital converted by the analog-to-digital converter and output to the measurement circuit.

Clause 8. The ranging apparatus of clause 1, wherein
the control circuit is further configured to increase the number of times of the first laser light emitted per unit time and reduce energy of the first laser light in the ranging according to the information.
Clause 9. The ranging apparatus of clause 1, wherein

the light sensor includes a plurality of light receiving elements (PXL) configured to be capable of outputting a current based on an intensity of the second laser light,

the measurement circuit includes a plurality of analog-to-digital converters (271) that respectively convert output signals of the light receiving elements into digital signals, and

the control circuit is further configured to cause the measurement circuit to perform ranging on a basis of a signal obtained by adding output signals of a set of two or more analog-to-digital converters among the analog-to-digital converters according to the information.

Clause 10. The ranging apparatus of clause 9, wherein

the number of the analog-to-digital converters is substantially equal to the number of ranging results output by the measurement circuit on a basis of the first laser light.

Clause 11. The ranging apparatus of clause 1, wherein

the control circuit is further configured to change an integrated number of light receiving results of the second laser light used for ranging by the measurement circuit in the ranging according to the information.

Clause 12. The ranging apparatus of clause 1, wherein

the measurement circuit is further configured to correct a light receiving result of the light sensor from an emission time of the first laser light to a first time on a basis of a light receiving result of a previous pixel or a previous frame, and range a distance to the subject on a basis of a corrected light receiving result.

Clause 13. The ranging apparatus of clause 1, wherein

the measurement circuit is further configured to, at the time of ranging performed by associating with the first laser light, correct a portion corresponding to a first period in the light receiving result of the light sensor by using noise value data in the first period calculated on a basis of the light receiving result of the same pixel, a previous pixel, or a previous frame at a second time, and range the distance to the subject on a basis of a corrected light receiving result.

Clause 14. The ranging apparatus of clause 1, wherein

the measurement circuit is further configured to calculate a detection threshold value for determining a distance for each of a plurality of periods on a basis of a light receiving result of a previous pixel or a previous frame at the time of ranging performed by associating with the first laser light, and range a distance to the subject using the detection threshold value for each of the periods.

Clause 15. The ranging apparatus of clause 1, wherein

the control circuit is further configured to calculate visibility in a surrounding environment on a basis of a plurality of ranging results for the same subject having a relative speed.

Clause 16. The ranging apparatus of clause 15, wherein

the control circuit is further configured to acquire a first ranging result obtained on a basis of reflected light from a first area of the same subject and a second ranging result obtained on a basis of reflected light from a second area different from the first area of the same subject, and calculate visibility in a surrounding environment using both the first ranging result and the second ranging result.

Clause 17. The ranging apparatus of clause 1, wherein

the control circuit is further configured to calculate visibility in a surrounding environment on a basis of a light detection result of a portion where it is ensured that a subject is not present in a case where it is determined that the light sensor cannot receive the second laser light.

Clause 18. The ranging apparatus of clause 17, wherein

the control circuit is further configured to calculate visibility in a surrounding environment on a basis of a plurality of ranging results for the same subject having a relative speed in a case where it is determined that light sensor has received the second laser light.

Although some arrangements of the present invention have been described, these arrangements have been presented as examples, and are not intended to limit the scope of the invention. These new arrangements can be implemented in various other forms, and various omissions, substitutions, and changes can be made without departing from the gist of the invention. These arrangements and modifications thereof are included in the scope and gist of the invention, and are included in the invention described in the claims and the equivalent scope thereof.

**Claims**

1.  A ranging apparatus comprising;

a light source (23) configured to emit a first laser light (LE);
a light sensor (26) configured to detect a second laser light (LR) corresponding to the first laser light reflected by an external subject;

a measurement circuit (27) configured to range a distance to the subject on a basis of a timing at which the light source emits the first laser light and a timing at which the light sensor detects the second laser light; and

a control circuit (21) configured to measure a reflection amount of the subject on a basis of a ranging result, and change a ranging parameter according to information using a measured reflection amount.

2. The ranging apparatus of claim 1, wherein

the information corresponds to visibility information in a surrounding environment, and
the control circuit is further configured to calculate the visibility on a basis of the measured reflection amount.

3. The ranging apparatus of claim 1, wherein

the information is a table in which a reflection amount of the subject and the ranging parameter are associated with each other, and
the control circuit changes the ranging parameter with reference to the information on a basis of the measured reflection amount.

4. The ranging apparatus of claim 1, wherein

the light sensor includes a plurality of light receiving elements (PXL) configured to be capable of outputting a current based on intensity of applied light, and
the control circuit is further configured to add output signals of a set of two or more of light receiving elements among the light receiving elements according to the information and output the added output signals to the measurement circuit.

5. The ranging apparatus of claim 4, wherein

the measurement circuit further includes an analog-to-digital converter (271), and
the added output signals of the set of two or more light receiving elements is analog-to-digital converted by the analog-to-digital converter and output to the measurement circuit.

6. The ranging apparatus of claim 1, wherein
the control circuit is further configured to increase the number of times of the first laser light emitted per unit time and reduce energy of the first laser light in the ranging according to the information.

7. The ranging apparatus of claim 1, wherein

the light sensor includes a plurality of light receiving elements (PXL) configured to be capable of outputting a current based on an intensity of the second laser light,
the measurement circuit includes a plurality of analog-to-digital converters (271) that respectively convert output signals of the light receiving elements into digital signals, and
the control circuit is further configured to cause the measurement circuit to perform ranging on a basis of a signal obtained by adding output signals of a set of two or more analog-to-digital converters among the analog-to-digital converters according to the information.

8. The ranging apparatus of claim 1, wherein
the control circuit is further configured to change an integrated number of light receiving results of the second laser light used for ranging by the measurement circuit in the ranging according to the information.

9. The ranging apparatus of claim 1, wherein
the measurement circuit is further configured to correct a light receiving result of the light sensor from an emission time of the first laser light to a first time on a basis of a light receiving result of a previous pixel or a previous frame, and range a distance to the subject on a basis of a corrected light receiving result.

10. The ranging apparatus of claim 1, wherein
the measurement circuit is further configured to, at the time of ranging performed by associating with the first laser light, correct a portion corresponding to a first period in the light receiving result of the light sensor by using noise value data in the first period calculated on a basis of the light receiving result of the same pixel, a previous pixel, or a previous frame at a second time, and range the distance to the subject on a basis of a corrected light receiving result.

11. The ranging apparatus of claim 1, wherein
the measurement circuit is further configured to calculate a detection threshold value for determining a distance for each of a plurality of periods on a basis of a light receiving result of a previous pixel or a previous frame at the time of ranging performed by associating with the first laser light, and range a distance to the subject using the detection threshold value for each of the periods.

12. The ranging apparatus of claim 1, wherein
the control circuit is further configured to calculate visibility in a surrounding environment on a basis of a plurality of ranging results for the same subject having a relative speed.

13. The ranging apparatus of claim 12, wherein
the control circuit is further configured to acquire a first ranging result obtained on a basis of reflected light from a first area of the same subject and a second ranging result obtained on a basis of reflected light from a second area different from the first area of the same subject, and calculate visibility in a surrounding environment using both the first ranging result and the second ranging result.

14. The ranging apparatus of claim 1, wherein
the control circuit is further configured to calculate visibility in a surrounding environment on a basis of a light detection result of a portion where it is ensured that a subject is not present in a case where it is determined that the light sensor cannot receive the second laser light.

15. The ranging apparatus of claim 14, wherein
the control circuit is further configured to calculate visibility in a surrounding environment on a basis of a plurality of ranging results for the same subject having a relative speed in a case where it is determined that light sensor has received the second laser light.

FIG. 1

1

10

## Information processing apparatus

11

### Information collecting device

31

Speed sensor

32

GNSS device

33

Camera

13

Transportation equipment controller

14

Speed controller

12

### Storage device

34

Route information database

15

Image processor

20

Ranging apparatus

# F I G. 2

F I G. 3

F I G. 4

F I G. 5

26

DR

PXL0

PXL1

PXL2

P pixels

Output

PXL(P-2)

PXL(P-1)

LR

# F I G. 6

PG(0)  PG(1)  PG(2)  PG(3)      PG(n-1)  PG(n)

D2
D1

| PX0(0) | PX0(1) | PX0(2) | PX0(3) | | PX0(n-1) | PX0(n) | |
| PX1(0) | PX1(1) | PX1(2) | PX1(3) | | PX1(n-1) | PX1(n) | SRG1 |
| ⋮ | ⋮ | ⋮ | ⋮ | ⋮ | ⋮ | ⋮ | |
| PXm(0) | PXm(1) | PXm(2) | PXm(3) | | PXm(n-1) | PXm(n) | |

SRG2

SRG3

SRG4

SRG5

SRG6

F I G. 7

FOV

LE(N+1)
LE(N)    LE(N+2)

R ⊗ → P
     ↓
     Q

(A)

SA

SS1
SS2
SS3
SS4
SS5
SS6

(B)

PG(N)        PG(N+1)        PG(N+2)

LE(N)         LE(N+1)        LE(N+2)    · · ·

V1 ·······

VSS

T1

Time

F I G. 8

26
27

| Light sensor | | Measurement device | | |
|---|---|---|---|---|

LR(N) ⟹

| PXL0 | 271-0 | 272-0 | |
|---|---|---|---|
| Light receiving element | ADC | Ranging circuit | → PX0(N) |

| PXL1 | 271-1 | 272-1 | |
|---|---|---|---|
| Light receiving element | ADC | Ranging circuit | → PX1(N) |

| PXL2 | 271-2 | 272-2 | |
|---|---|---|---|
| Light receiving element | ADC | Ranging circuit | → PX2(N) |

⋮

| PXLm | 271-m | 272-m | |
|---|---|---|---|
| Light receiving element | ADC | Ranging circuit | → PXm(N) |

# F I G. 9

FOV

R⊗→P
↓
Q

LE(N)   LE(N+2)

(A)

SA

SS1
SS2
SS3
SS4
SS5
SS6

PG(N)                                    PG(N+2)

LE(N)                                     LE(N+2)

V2 ·······

(B)    VSS

T2

Time

F I G. 10

(A)

FOV

LE(N+1)
LE(N)

R ⊗ → P
↓ Q

SA

→ SS1
→ SS2
→ SS3
→ SS4
→ SS5
→ SS6

(B)

PG(N)

LE(N)

V2 ⋯⋯

VSS

PG(N+1)

LE(N+1)

T3

Time

F I G. 11

26

Light sensor

PXL(3k)

| Light receiving element |
| --- |

PXL(3k+1)

LR(N) ⇨

| Light receiving element |
| --- |

PXL(3k+2)

| Light receiving element |
| --- |

⋮

27

Measurement device

271-k

| ADC |
| --- |

272-k

| Ranging circuit |
| --- |

→ PXk(N)

⋮        ⋮        ⋮

F I G. 12

FOV

R⊗——▶P

Q

LE(2N+1)
LE(2N) ╱ LE(2N+2) ···

SA

(A)

→ SS1
→ SS2
→ SS3
→ SS4
→ SS5
→ SS6

PG(N)          PG(N+1)          PG(N+2)

V3
VSS    LE(2N)  LE(2N+1)  LE(2N+2)  LE(2N+3)  LE(2N+4)  LE(2N+5)

(B)

Time

T4

T1

F I G. 13

F I G. 14

26

27

Light sensor

Measurement device

PXL(3k)

271-(3k)

| Light receiving element | → | ADC |

PXL(3k+1)

271-(3k+1)

272-k

LR(N) ⇨

| Light receiving element | → | ADC | → | Ranging circuit | → PXk(N) |

PXL(3k+2)

271-(3k+2)

| Light receiving element | → | ADC |

⋮     ⋮     ⋮     ⋮

## F I G. 15

26

27

Light sensor

Measurement device

PXL0

271-0

| Light receiving element | → | ADC |

PXL1

271-1

272-0

| Light receiving element | → | ADC | → | Ranging circuit | → PX0(N) |

LR(N) ⇨

PXL2

271-2

272-1

| Light receiving element | → | ADC | → | Ranging circuit | → PX1(N) |

PXL3

271-3

272-2

| Light receiving element | → | ADC | → | Ranging circuit | → PX2(N) |

⋮     ⋮     ⋮     ⋮

## F I G. 16

(A)

LE(N)　　　　　LE(N+1)　　　　　LE(N+2)

Time

(B)

ALR

Time

D(N)

ALR

Time

D(N+1)

ALR

Time

D(N+2)

(C)

| Pixel | Default setting | First integration setting | Second integration setting |
|-------|-----------------|---------------------------|----------------------------|
| PX(N) | D(N) | No calculation | D(N−1)+D(N) |
| PX(N+1) | D(N+1) | D(N)+D(N+1) | D(N)+D(N+1) |
| PX(N+2) | D(N+2) | No calculation | D(N+1)+D(N+2) |
| PX(N+3) | D(N+3) | D(N+2)+D(N+3) | D(N+2)+D(N+3) |

F I G. 17

**Start**

Acquire visibility information ~S11

Change ranging setting according to visibility information ~S12

**End**

F I G. 18

First comparative example
—— 40  ---- 300

First arrangement
—·— 40  —··— 300

Light reception amount

Distance

F I G. 19

D(N)

26                    27a

Light sensor          Measurement device

PXL

271              274

LR(N)
Light receiving    ADC                Difference
element                               calculator    Ranging circuit    PX(N)

272

273

Noise value holding unit

D(N−1)

F I G. 20

(A)

Light reception amount corresponding to LE (N-1)

Erroneous detection

LR

TH

t0    tA    Time

Execute difference calculation using light receiving result between t0 and tA

(B)

Light reception amount corresponding to LE (N)

Before difference calculation

After difference calculation

LR

TH

t0    tA    Time

F I G. 21

F I G. 22

EP 4 524 610 A1

F I G. 23

46

26

Light sensor

D(N)

27c

Measurement device

ADC 277

PXL

LR(N) ⇒ Light receiving element → 276 TIA →

279

Comparator → PX(N)

278

Threshold determiner →

D(N−1)

F I G. 24

(A)

Set TH based on measurement result of LE (N-1)

(B)

F I G. 25

F I G. 26

F I G. 27

Light reception
amount

| | In absence of fog |
|---|---|
| - - - - - | In presence of fog |

LR

BGN

t0

Time

F I G. 28

Water component
of fog

Outgoing light

(A)

| Visibility meter |

Scattered light

Outgoing light

(B)

| Visibility meter |

| Subject |

Reflected light

F I G. 29

```
          ┌─────────┐
          │  Start  │
          └─────────┘
               │
               ▼        S21
          ╱─────────╲
         ╱  Could    ╲         NO
        ╱   range      ╲───────────────────┐
        ╲ landmark LM? ╱                    │
         ╲            ╱                      │
          ╲─────────╱                       │
               │ YES                        │
               │         S22                │         S23
               ▼                            ▼
   ┌───────────────────────────┐   ┌───────────────────────────┐
   │ Calculate visibility by   │   │ Calculate visibility by   │
   │     using subject         │   │   backscattering method   │
   └───────────────────────────┘   └───────────────────────────┘
               │                            │
               │◄───────────────────────────┘
               ▼
          ┌─────────┐
          │   End   │
          └─────────┘
```

## F I G. 30

## F I G. 31

| Distance (m) | Reflection amount | $\log(Y*X^2)$ |
|:---:|:---:|:---:|
| 20 | 24.4 | 9.186 |
| 22 | 20.1 | 9.184 |
| 24 | 16.9 | 9.182 |
| 26 | 14.3 | 9.179 |
| 28 | 12.3 | 9.177 |
| 30 | 10.7 | 9.174 |

F I G. 32

| Distance (m) | Reflection amount | $\log(Y*X^2)$ |
|:---:|:---:|:---:|
| 20 | 1.3 | 6.215 |
| 22 | 0.8 | 5.915 |
| 24 | 0.5 | 5.615 |
| 26 | 0.3 | 5.316 |
| 28 | 0.2 | 5.016 |
| 30 | 0.1 | 4.717 |

F I G. 33

F I G. 34

Visibility ─{ ──── 40    ── ── 100    ── · ── 300    ── ·· ── 1000

F I G. 35

Visibility ─{ ──── 40    ── ── 100    ── · ── 300    ── ·· ── 1000

F I G. 36

(A) Case where A = 10,000 (second comparison example)

| Distance (m) | Reflection amount | Visibility |
|:---:|:---:|:---:|
| 20 | 7.5 | 100 |
| 22 | 5.5 | 100 |
| 24 | 4.1 | 100 |
| 26 | 3.1 | 100 |
| 28 | 2.4 | 100 |
| 30 | 1.8 | 100 |

(B) Case where A = 7,000 (second comparison example)

| Distance (m) | Reflection amount | Visibility |
|:---:|:---:|:---:|
| 20 | 5.3 | 77 |
| 22 | 3.9 | 79 |
| 24 | 2.9 | 80 |
| 26 | 2.2 | 81 |
| 28 | 1.7 | 82 |
| 30 | 1.3 | 83 |

F I G. 37

(A) Case where A = 10,000 (fifth arrangement)

| Distance (m) | Reflection amount | $\log(Y*X^2)$ |
|---|---|---|
| 20 | 7.5 | 8.012 |
| 22 | 5.5 | 7.892 |
| 24 | 4.1 | 7.772 |
| 26 | 3.1 | 7.653 |
| 28 | 2.4 | 7.533 |
| 30 | 1.8 | 7.413 |

(B) Case where A = 1000 (fifth arrangement)

| Distance (m) | Reflection amount | $\log(Y*X^2)$ |
|---|---|---|
| 20 | 0.8 | 5.709 |
| 22 | 0.6 | 5.590 |
| 24 | 0.4 | 5.470 |
| 26 | 0.3 | 5.350 |
| 28 | 0.2 | 5.230 |
| 30 | 0.2 | 5.110 |

F I G. 38

Europäisches
Patentamt

European
Patent Office

Office européen
des brevets

# EUROPEAN SEARCH REPORT

Application Number

EP 24 17 5567

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/235052 A1 (LACHAPELLE JOSEPH G [US] ET AL) 1 August 2019 (2019-08-01) | 1-7,9-15 | INV. G01S7/484 |
| Y | * paragraphs [0001], [0067], [0068], [0092], [0151] - [0158]; figure 1 * | 8 | G01S7/486 G01S7/487 |
| | ----- | | G01S17/931 |
| E | EP 4 435 467 A1 (TOSHIBA KK [JP]; TOSHIBA INFRASTRUCTURE SYSTEMS & SOLUTIONS CORP [JP]) 25 September 2024 (2024-09-25) * paragraphs [0153] - [0168]; figures 23-25 * | 1,2 | ADD. G01S13/931 |
| | ----- | | |
| Y | US 11 606 517 B1 (SHARMA SHASHANK [US] ET AL) 14 March 2023 (2023-03-14) * column 6, line 31 - column 7, line 10 * | 8 | |
| | ----- | | |
| A | WO 2020/187677 A1 (VALEO SCHALTER & SENSOREN GMBH [DE]) 24 September 2020 (2020-09-24) * the whole document * | 8 | |
| | ----- | | |

**TECHNICAL FIELDS SEARCHED (IPC)**

G01S

The present search report has been drawn up for all claims

| Place of search | Date of completion of the search | Examiner |
|---|---|---|
| Munich | 7 October 2024 | Beer, Mark |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 5567

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-2024

| Patent document cited in search report | | Publication date | Patent family member(s) | | Publication date |
|---|---|---|---|---|---|
| US 2019235052 | A1 | 01-08-2019 | US 2018284226 A1 | | 04-10-2018 |
| | | | US 2019235052 A1 | | 01-08-2019 |
| EP 4435467 | A1 | 25-09-2024 | NONE | | |
| US 11606517 | B1 | 14-03-2023 | NONE | | |
| WO 2020187677 | A1 | 24-09-2020 | DE 102019107115 A1 | | 24-09-2020 |
| | | | WO 2020187677 A1 | | 24-09-2020 |

For more details about this annex : see Official Journal of the European Patent Office, No. 12/82